# EUROPEAN PATENT APPLICATION

(11) **EP 4 706 694 A1**
(43) Date of publication of application: **11.03.2026**
(21) Application number: 25200797.6
(22) Date of filing: 08.09.2025
(51) Int. Cl.: A61L 24/00, A61L 26/00, A61L 27/52, A61L 27/54, C08J 3/075

(54) **HYDROGELS FOR CARGO DELIVERY TO TUBULAR EPITHELIAL STRUCTURES**

(30) Priority: 06.09.2024 US 202463691856 P
(71) Applicant: Georgia Tech Research Corporation, Atlanta, GA 30318 (US); Children's Hospital Medical Center, Cincinnati, Ohio 45229-3029 (US)
(72) Inventor: Garcia, Andres, Atlanta, 30318 (US); Mulero-Russe, Adriana, Atlanta, 30318 (US); Helmrath, Michael A., Cincinnati, 45233 (US)
(74) Representative: Forresters IP LLP

(57) **Abstract**

Disclosed herein are hydrogels for delivering cargo to a tubular epithelial structure and methods of forming the same. The disclosed hydrogels can be formed by applying a hydrogel precursor to a tubular epithelial structure (e.g., intestine, esophagus, stomach, bile duct, etc.) through a lumen of said tubular epithelial structure and curing the hydrogel precursor in place (e.g., as a plug or a coating), for example, using light (e.g., UV light). The hydrogel degrades within the tubular epithelial structure over time, thereby releasing the cargo to the tubular epithelial structure. Also disclosed herein are methods of treating and/or preventing tissue damage using any of the disclosed hydrogels.

## Description

### CROSS-REFERENCE TO RELATED APPLICATIONS

This application claims the benefit of priority to U.S. Provisional Application No. 63/691,856, filed September 6, 2025, which is incorporated by reference herein in its entirety.

### GOVERNMENT SUPPORT CLAUSE

This invention was made with government support under F31DK130581 awarded by the National Institutes of Health. The Government has certain rights in the invention.

### BACKGROUND

The intestinal epithelium plays essential roles in barrier function, nutrient absorption, and protection against intestinal microbiota. Improper function of the intestinal epithelium accompanied by a highly inflammatory environment is a hallmark of inflammatory bowel diseases (IBD), including Crohn's disease (CD) and ulcerative colitis (UC) [201]. In the US, >1.6 million patients suffer from these conditions [202], resulting in >$662K (CD) and >$369K (UC) in lifetime healthcare costs per patient [203]. Although the cause(s) of IBD is still under investigation, evidence supports an important role in the dysregulation of intestinal barrier function in chronic intestinal inflammation leading to IBD [204], [205]. Current treatments target inflammation with anti-inflammatory biological drugs, including TNF-α signaling antagonists [206], but these therapies often fail to achieve closing and healing of wounds of the intestinal epithelium associated with full IBD recovery [151]. Human intestinal organoids (HIOs) derived from adult stem cells or human pluripotent stem cells (hPSCs) represent a transformative tissue source for modeling intestinal epithelia. HIOs are 3D multicellular structures containing epithelial and mesenchymal cell types that recapitulate histological and architectural features of the human intestine. HIOs also have therapeutic potential for repairing intestinal lining wounds [207]. Murine Lgr5+ adult intestinal stem cell-derived organoids, delivered with Matrigel^{™}, engraft and repair injured intestinal wounds in a colitis model [5]. Although providing proof-of-concept results, the clinical translatability of this strategy is severely limited by the use of Matrigel^{™} as a delivery vehicle. Matrigel^{™}, which is also required for HIO generation, is a complex extract of Engelbreth-Holm-Swarm murine sarcoma basement membrane with ill-defined composition, lot-to-lot variability, and inability to decouple matrix physical and biochemical properties [18], [19].

A clinically translatable fully synthetic matrix (PEG-4MAL) to deliver hPSC-derived HIOs to murine colonic wounds to promote engraftment and repair was previously developed [152]. Although these results are very promising, the murine model used was limited to small, localized biopsy wounds and did not represent clinically relevant wounds comparable to ulcers in IBD and/or intestinal failure. Others have developed a clinically representative model involving chemical and physical injury to a ~3 cm ileum segment in immunodeficient rats that presents mucosal and intestinal epithelial membrane disruption [208], representative of exfoliative rejection after intestinal transplantation [209]. Although HIO fragments engraft to the wounds after delivery in cell media, this approach suffers from low engraftment efficiency. Other intestinal tissue engineering approaches mostly focus on engineering a transplantable intestinal segment using decellularized intestinal tissue or tubular synthetic scaffolds as a treatment for short bowel syndrome [158]. Meran et al. recently showed that patient-derived HIOs can repopulate a decellularized human intestinal segment as a therapy for intestinal failure [7]. These approaches, however, are limited by the complexity of the intestinal organ, which includes muscle network, nerve integration, and vascularization.

Improved cell-based therapies for the intestine and other tubular epithelial structures are therefore needed. These needs and others are at least partially satisfied by the present disclosure.

### SUMMARY

Disclosed herein is a technology to polymerize a synthetic hydrogel *in situ* in the intestine (or another tubular epithelial structure) using UV light fiber optic cable. Two approaches are presented: (i) internal polymerization (e.g., within the intestinal lumen) to coat the internal surface of the intestine, and (ii) external polymerization (e.g., outside the intestine), which results in a hydrogel body (e.g., hydrogel plug) inside the intestine. The hydrogel can deliver therapeutic cargo, including stem cells and intestinal organoids, to localize them to target large areas of the intestine via high viability and bioactivity. Furthermore, the hydrogel is designed to degrade over time to release cargo and elicit minimal inflammation to support epithelial repair. This approach can be applied to other epithelial tissues and gut components, such as the esophagus, stomach, and colon.

In some aspects, disclosed herein is a hydrogel formable to deliver a cargo to a tubular epithelial structure, the hydrogel formed by: a) preparing a hydrogel precursor including the cargo; b) applying the hydrogel precursor to the tubular epithelial structure through a lumen of said tubular epithelial structure; and c) curing the hydrogel precursor, thereby forming a hydrogel comprising the cargo; wherein the hydrogel degrades over time, thereby releasing the cargo to the tubular epithelial structure.

In some aspects, also disclosed herein is a method of delivering a cargo to a tubular epithelial structure, the method including: a) preparing a hydrogel precursor including the cargo; b) applying the hydrogel precursor to the tubular epithelial structure through a lumen of said tubular epithelial structure; and c) curing the hydrogel precursor, thereby forming a hydrogel comprising the cargo; wherein the hydrogel degrades over time, thereby releasing the cargo to the tubular epithelial structure.

In some aspects, also disclosed herein is a method of treating and/or preventing tissue damage in a subject, the method comprising conducting any of the disclosed methods within a tubular epithelial structure of the subject. Also disclosed herein is a hydrogel precursor including the cargo as disclosed herein or a hydrogel comprising the cargo as disclosed herein for use in such method.

Other systems, methods, features and/or advantages will be or may become apparent to one with skill in the art upon examination of the following drawings and detailed description. It is intended that all such additional systems, methods, features and/or advantages be included within this description and be protected by the accompanying claims.

### BRIEF DESCRIPTION OF DRAWINGS

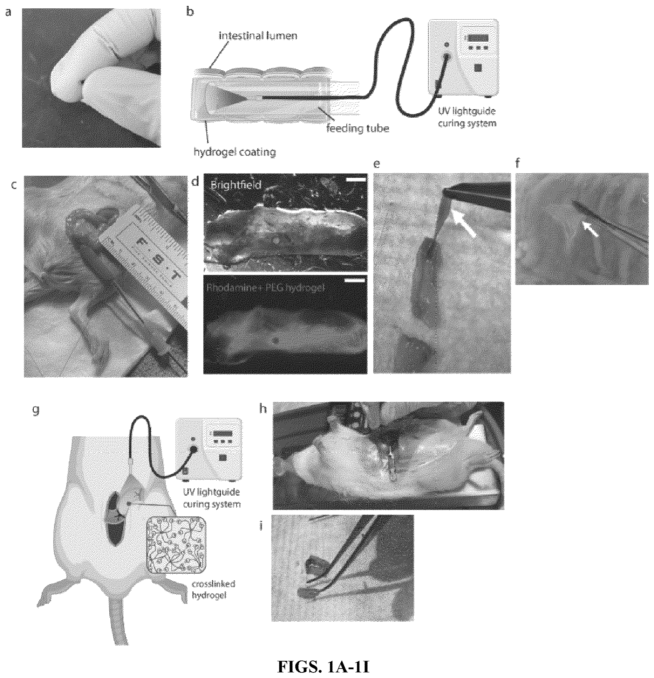

**FIGURES 1A-11** depict hydrogel delivery methods to the intestine. **FIG. 1A** shows a UV lightguide cable with a 1.0 mm diameter. **FIG. 1B** is an illustration of internal polymerization method. **FIG. 1C** shows a lightguide cable inside a plastic feeding tube placed inside the intestinal lumen exposes hydrogel precursor to UV light in the annular space of the intestinal lumen. **FIG. 1D** shows a thin coating of rhodamine+PEG hydrogel post *in vivo* delivery. **FIGS. 1E-1F** show *ex vivo* hydrogel delivery on mouse intestine **(****FIG. 1E****)** and on pig intestine **(****FIG. 1F). FIG. 1G** is an illustration of external polymerization method. **FIG. 1H** shows a lightguide cable outside the intestine irradiates hydrogel precursor through the intestinal wall. **FIG. 1I** shows a polymerized hydrogel plug post-exposure.

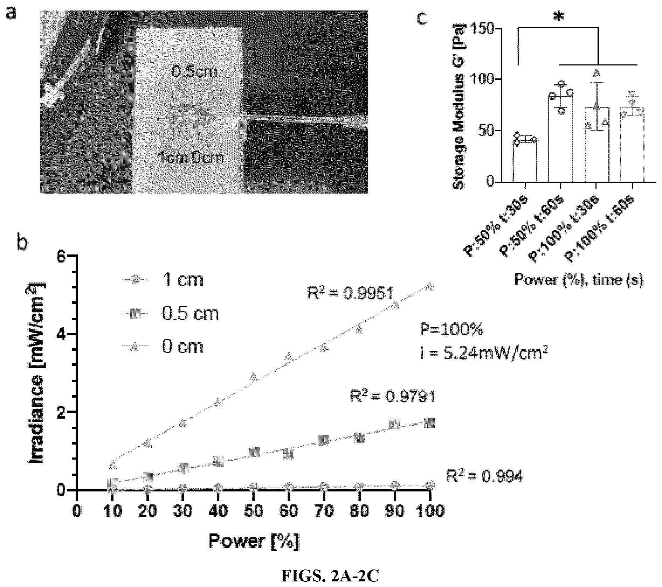

**FIGURES 2A-2C** depict UV power and exposure time characterization for internal polymerization method using PEG-4NB. **FIG. 2A** is an image of the UV lightguide enclosed in the feeding tube taped to the UV radiometer sensor. **FIG. 2B** shows UV irradiance measurements captured through the plastic feeding tube, maximum irradiance at 100% power = 5.24mW/cm². **FIG. 2C** shows storage modulus values for varying exposure times (30s or 60s) and UV powers (50% or 100%). The statistics used was one-way ANOVA with Tukey's multiple comparison test.

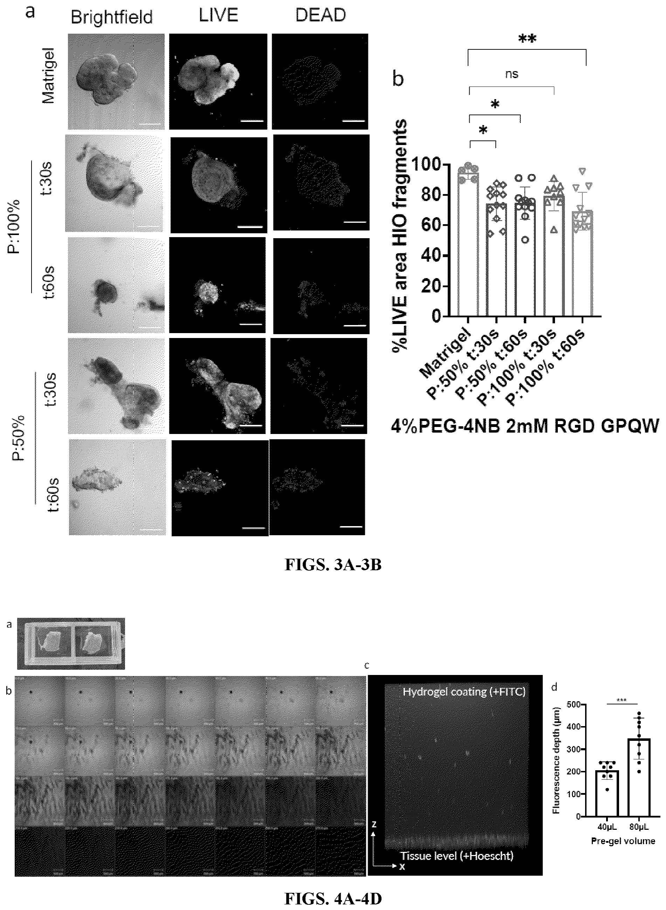

**FIGURES 3A-3B** depict HIO fragment viability at 24hrs post encapsulation in 4% PEG-4NB. **FIG. 3A** shows confocal images of live and dead viability dyes at varying powers and times polymerized with UV light enclosed in the feeding tube. **FIG. 3B** shows quantification of the %live area HIO fragments. The statistical test used was Kruskal-Wallis multiple comparison Dunnet's test. (n=5-10 HIO structures ± SD).
**FIGURES 4A-4D** depict hydrogel thickness characterization PEG-4NB internal polymerization. **FIG. 4A** shows gross intestine with FITC+ hydrogel coating *ex vivo.* **FIG. 4B** shows z-stack fluorescence depth slice thickness (10µm). **FIG. 4C** shows a 3D rendition of hydrogel thickness. **FIG. 4D** shows quantification of fluorescence depth for 4mm long intestinal loop.

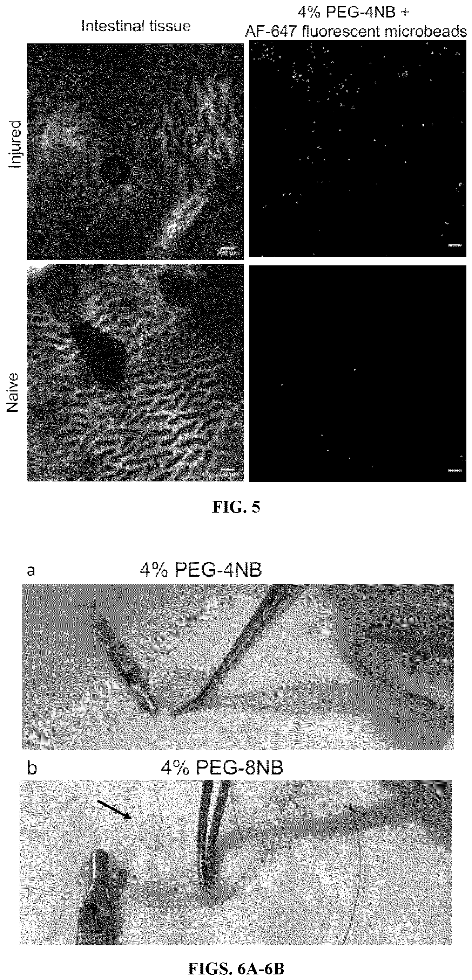

**FIGURE 5** depicts PEG-4NB adhesion to injured or naive tissue using AlexaFluor-647 fluorescent microbeads (diameter=10µm) embedded into hydrogel coating.
**FIGURES 6A-6B** depict PEG-4NB and PEG-8NB hydrogel conjugated with FITC-PEG-SH after external polymerization method. **FIG. 6A** shows that PEG-4NB is still a liquid - not polymerized. **FIG. 6B** shows a PEG-8NB polymerized hydrogel plug.

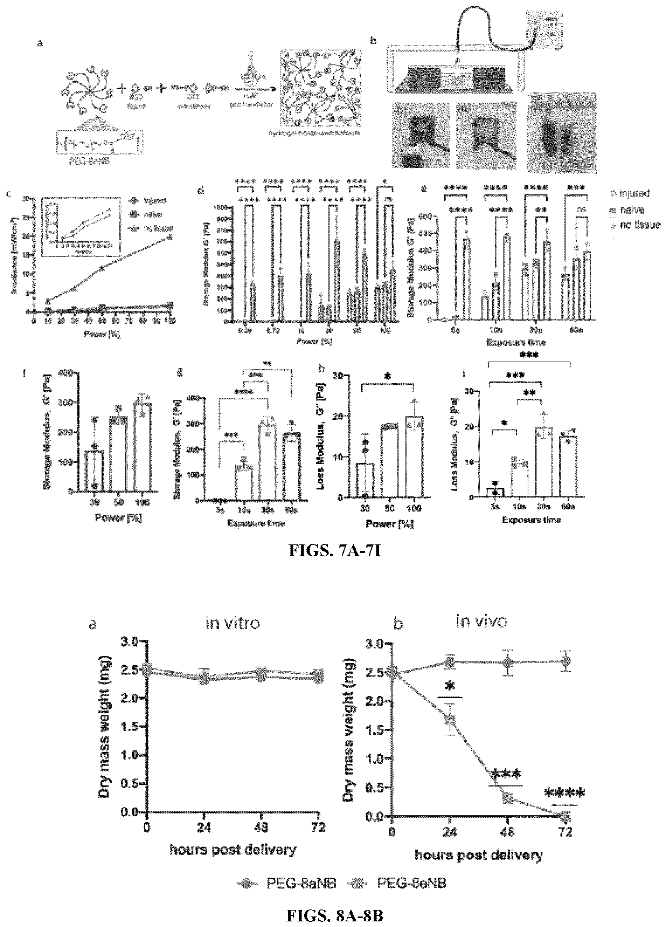

**FIGURES 7A-7I** depict that the engineered PEG-8eNB hydrogel exhibits controlled photopolymerization kinetics. **FIG. 7A** shows a PEG-8eNB hydrogel synthesis schematic. **FIG. 7B** shows a photopolymerization testing setup using injured "i" and naive "n" tissue. **FIG. 7C** shows irradiance values at varying UV powers at a 6mm distance. **FIGS. 7D-****7E** show hydrogel storage modulus values polymerized through injured tissue, naive tissue, and no tissue at varying powers **(****FIG. 7D****)** and varying exposure times **(****FIG. 7E****).** The statistical test used was two-way ANOVA with Tukey's multiple comparisons * P < 0.05, *** P < 0.001. **FIGS. 7F-7I** show storage modulus and loss modulus values for hydrogels polymerized through injured tissue varying power at constant exposure time 30s **(****FIG. 7F, FIG. 7H****),** and varying exposure time at constant power 100% **(****FIG. 7G, FIG. 7I****).** The statistical test used one-way ANOVA, Tukey multiple comparisons test ** P < 0.01, *** P < 0.001, **** P < 0.0001.
**FIGURES 8A-8B** depict hydrolytically degradable PEG-8eNB hydrogel degradation profile. Dry mass measurements for hydrogels with amide linkage PEG-8aNB and ester linkage PEG-8eNB *in vitro* **(****FIG. 8A****)** and *in vivo* **(****FIG. 8B****).** The statistical test used was a two-way ANOVA with Sidak's multiple comparisons test to detect differences per day against day 0 per group. (mean ± SD).

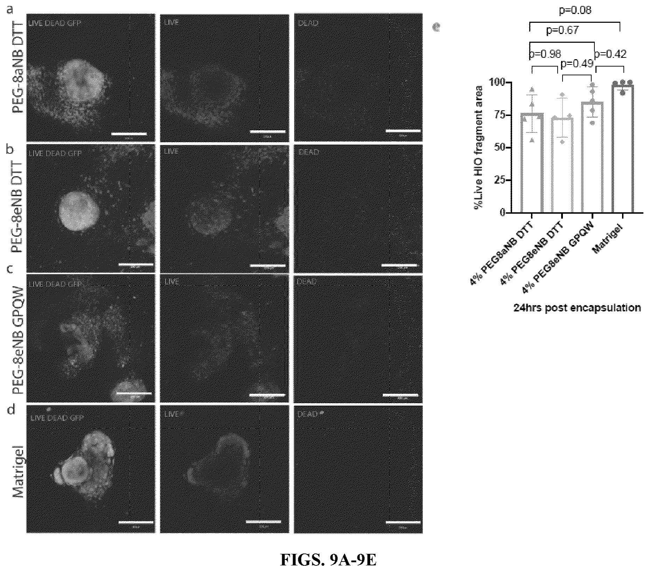

**FIGURES 9A-9E** depict that Human Intestinal Organoid (HIOs) fragments exhibit high viability on PEG hydrogels *in vitro.* **FIGS. 9A-9D** show Live (Calcein AM dye) and Dead (TOTO-3 dye) images for GFP+ HIOs maintained in PEG-8aNB DTT **(****FIG. 9A****),** PEG-8eNB DTT **(****FIG. 9B****),** PEG-8eNB GPQW **(****FIG. 9C****),** and Matrigel **(****FIG. 9D****)** after 24hrs post encapsulation. **FIG. 9E** shows quantification of the % live area across the groups. The statistical test used was a one-way ANOVA Tukey multiple comparison test.

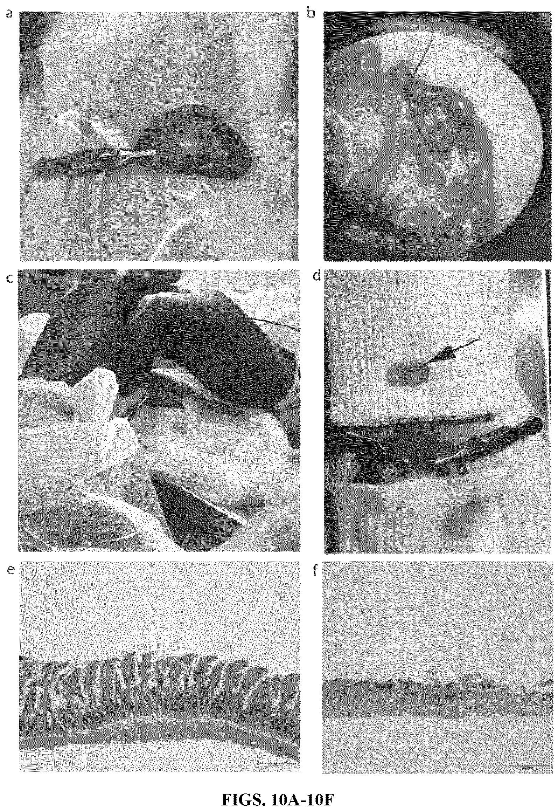

**FIGURES 10A-10F** depict hydrogel delivery in non-survival intestinal injury model. **FIG. 10A** shows an isolated intestinal segment with bulldog clamp and nylon suture. **FIG. 10B** shows a small incision in the anti-mesenteric side to access the lumen. **FIG. 10C** shows photopolymerization of hydrogel in the intestinal lumen. **FIG. 10D** shows the hydrogel plug post-polymerization. **FIGS. 10E-10F** show H&E images of the non-injured intestinal tissue with epithelial morphology **(****FIG. 10E****)** and the intestinal tissue after injury **(****FIG. 10F****).**

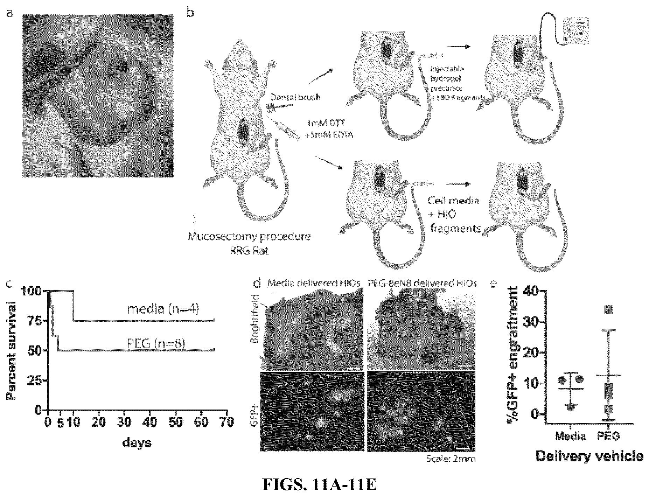

**FIGURES 11A-11E** depict that HIO engraft to injured intestine after hydrogel delivery. **FIG. 11A** shows intestinal anastomosis, where the white arrow denotes targeted intestinal loop. **FIG. 11B** shows the experimental procedure schematic. **FIG. 11C** shows a survival curve for animals treated with media and PEG hydrogel. The statistical test used was the Mantel-Cox test. **FIG. 11D** shows gross images of intestinal loop at 9 weeks post injury, GFP+ areas denotes HIO engraftment, scale: 2mm. **FIG. 11E** shows quantification of %GFP+ area occupied, statistical test used was unpaired t-test.

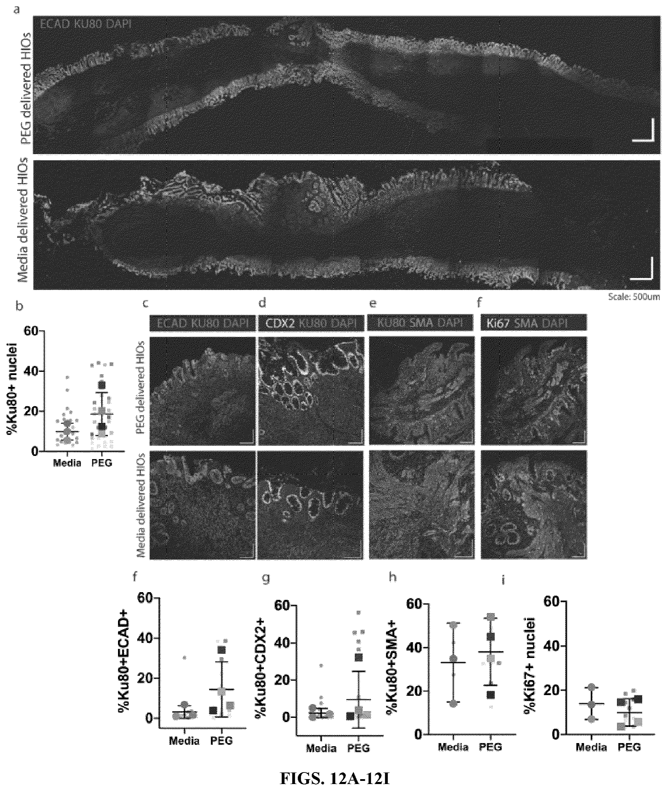

**FIGURES 12A-12I** depict immunofluorescence analysis of the HIO treated tissues at 9 weeks post injury. **FIG. 12A** shows stitched tile scan images of the treated intestinal loop with PEG or media-delivered HIOs stained with ECAD, KU80, and nuclear counterstain, scale: 500µm. **FIG. 12B** shows human nuclear marker KU80 quantification. **FIGS. 12C-12F** show immunofluorescence intestine tissue sections with ECAD **(****FIG. 12C****),** CDX2 **(****FIG. 12D****),** SMA **(****FIG. 12E****),** and Ki67 **(****FIG. 12F****),** scale: 100µm. **FIGS. 12G-12I** show quantification of immunofluorescence markers. Statistical test used: nested t-test (mean ± SD).

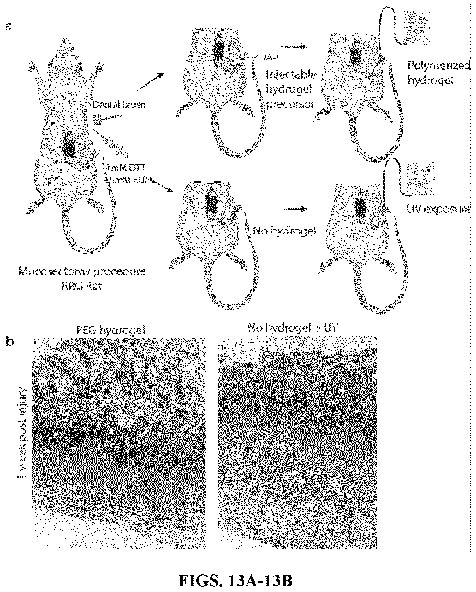

**FIGURES 13A-13B** depict that the hydrogel does not impact intestinal early intestinal re-epithelization. **FIG. 13A** shows the experimental design schematic. **FIG. 13B** shows H&E sections of treated intestinal loop at 1 week post-injury.

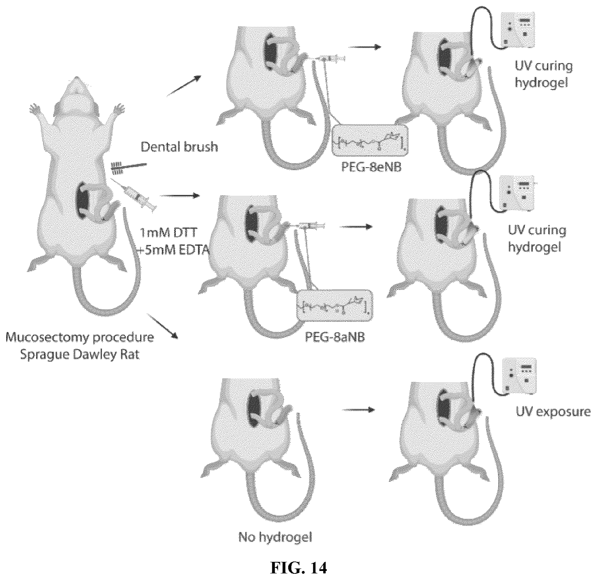

**FIGURE 14** depicts hydrogel delivery in immunocompetent rat model experimental design schematic.

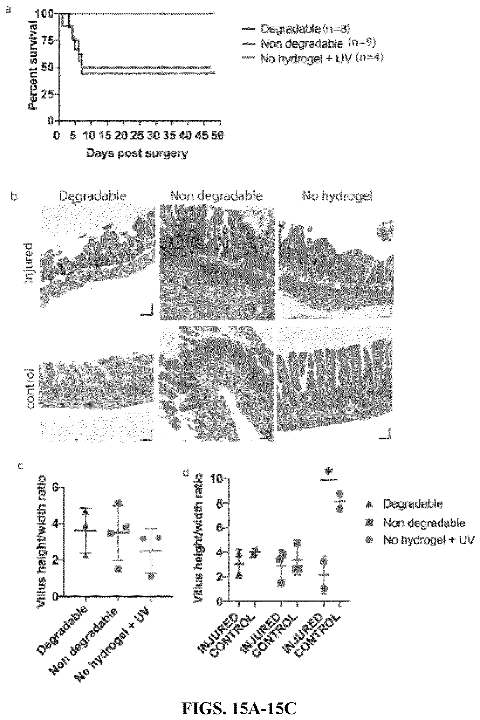

**FIGURES 15A-15D** depict evaluating intestinal healing post hydrogel delivery to immunocompetent rat model. **FIG. 15A** shows a survival curve for degradable, non-degradable and no hydrogel treated groups. The statistical test used was the Mantel-Cox test. **FIG. 15B** shows H&E tissue sections of injured and control intestinal loop. **FIG. 15C** shows quantification of villus height and width ratio across injured tissues statistical test used was nested one way ANOVA Tukey multiple comparison test (mean ± SD). **FIG. 15D** shows quantification of villus height and width ratio for injured and control tissue per group, statistical test used was two-way ANOVA Sidak's multiple comparison test (mean ± SD) * P < 0.05.

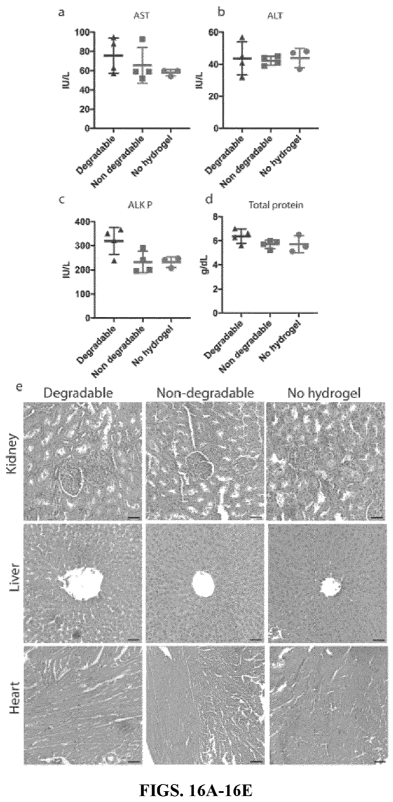

**FIGURES 16A-16E** depict toxicity serum markers for AST **(****FIG. 16A****),** ALT **(****FIG. 16B****),** ALK P **(****FIG. 16C****),** and total protein **(****FIG. 16D****)** and H&E sections **(****FIG. 16E****)** of kidney, liver, and heart for degradable, non-degradable and no hydrogel groups. The statistical test used a one-way ANOVA Tukey multiple comparison test (mean ± SD).

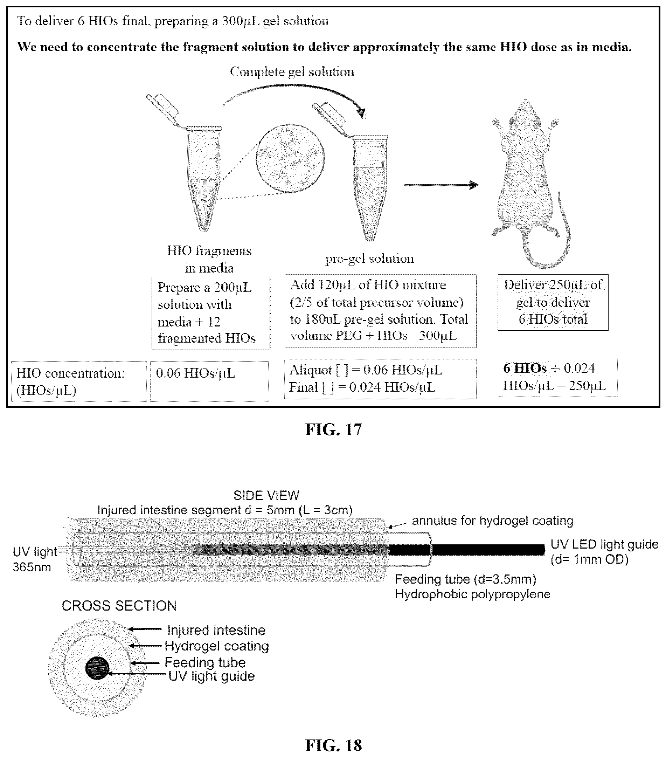

**FIGURE 17** depicts calculations for HIO delivery using hydrogel.
**FIGURE 18** depicts a schematic of PEG-4NB internal polymerization method including (top) side view and (bottom) cross section.

### DETAILED DESCRIPTION

It is appreciated that certain features of the disclosure, which are, for clarity, described in the context of separate aspects, can also be provided in combination with a single aspect. Conversely, various features of the disclosure, which are, for brevity, described in the context of a single aspect, can also be provided separately or in any suitable subcombination. Unless defined otherwise, all technical and scientific terms used herein have the same meaning as commonly understood by one of ordinary skill in the art. Methods and materials similar or equivalent to those described herein can be used in the practice or testing of the present disclosure.

### DEFINITIONS

In this specification and in the claims that follow, reference will be made to a number of terms, which shall be defined to have the following meanings:
As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used in the specification and the appended claims, the singular forms "a," "an" and "the" include plural referents unless the context clearly dictates otherwise. Thus, for example, reference to "a compound", "a composition", or "a cancer", includes, but is not limited to, two or more such compounds, compositions, or cancers, and the like.

It should be noted that ratios, concentrations, amounts, and other numerical data can be expressed herein in a range format. It can be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. Ranges can be expressed herein as from "about" one particular value, and/or to "about" another particular value. Similarly, when values are expressed as approximations, by use of the antecedent "about," it can be understood that the particular value forms a further aspect. For example, if the value "about 10" is disclosed, then "10" is also disclosed.

When a range is expressed, a further aspect includes from the one particular value and/or to the other particular value. For example, where the stated range includes one or both of the limits, ranges excluding either or both of those included limits are also included in the disclosure, e.g. the phrase "x to y" includes the range from 'x' to 'y' as well as the range greater than 'x' and less than 'y'. The range can also be expressed as an upper limit, e.g. 'about x, y, z, or less' and should be interpreted to include the specific ranges of 'about x', 'about y', and 'about z' as well as the ranges of 'less than x', less than y', and 'less than z'. Likewise, the phrase 'about x, y, z, or greater' should be interpreted to include the specific ranges of 'about x', 'about y', and 'about z' as well as the ranges of 'greater than x', greater than y', and 'greater than z'. In addition, the phrase "about 'x' to 'y'", where 'x' and 'y' are numerical values, includes "about 'x' to about 'y'".

It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "about 0.1% to 5%" should be interpreted to include not only the explicitly recited values of about 0.1% to about 5%, but also include individual values (e.g., about 1%, about 2%, about 3%, and about 4%) and the sub-ranges (e.g., about 0.5% to about 1.1%; about 5% to about 2.4%; about 0.5% to about 3.2%, and about 0.5% to about 4.4%, and other possible sub-ranges) within the indicated range.

As used herein, the terms "about," "approximate," "at or about," and "substantially" mean that the amount or value in question can be the exact value or a value that provides equivalent results or effects as recited in the claims or taught herein. That is, it is understood that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art such that equivalent results or effects are obtained. In some circumstances, the value that provides equivalent results or effects cannot be reasonably determined. In such cases, it is generally understood, as used herein, that "about" and "at or about" mean the nominal value indicated ±10% variation unless otherwise indicated or inferred. In general, an amount, size, formulation, parameter or other quantity or characteristic is "about," "approximate," or "at or about" whether or not expressly stated to be such. It is understood that where "about," "approximate," or "at or about" is used before a quantitative value, the parameter also includes the specific quantitative value itself, unless specifically stated otherwise.

As used herein, the term "effective amount" refers to an amount that is sufficient to achieve the desired modification of a physical property of the composition or material. For example, an "effective amount" of a monomer refers to an amount that is sufficient to achieve the desired improvement in the property modulated by the formulation component, e.g. desired antioxidant release rate or viscoelasticity. The specific level in terms of wt% in a composition required as an effective amount will depend upon a variety of factors including the amount and type of monomer, amount and type of polymer, e.g., acrylamide, amount of antioxidant, and desired release kinetics.

As used herein, the term "therapeutically effective amount" refers to an amount that is sufficient to achieve the desired therapeutic result or to have an effect on undesired symptoms but is generally insufficient to cause adverse side effects. The specific therapeutically effective dose level for any particular patient will depend upon a variety of factors including the disorder being treated and the severity of the disorder; the specific composition employed; the age, body weight, general health, sex and diet of the patient; the time of administration; the route of administration; the rate of excretion of the specific compound employed; the duration of the treatment; drugs used in combination or coincidental with the specific compound employed and like factors within the knowledge and expertise of the health practitioner and which may be well known in the medical arts. In the case of treating a particular disease or condition, in some instances, the desired response can be inhibiting the progression of the disease or condition. This may involve only slowing the progression of the disease temporarily. However, in other instances, it may be desirable to halt the progression of the disease permanently. This can be monitored by routine diagnostic methods known to one of ordinary skill in the art for any particular disease. The desired response to treatment of the disease or condition also can be delaying the onset or even preventing the onset of the disease or condition.

For example, it is well within the skill of the art to start doses of a compound at levels lower than those required to achieve the desired therapeutic effect and to gradually increase the dosage until the desired effect is achieved. If desired, the effective daily dose can be divided into multiple doses for purposes of administration. Consequently, single dose compositions can contain such amounts or submultiples thereof to make up the daily dose. The dosage can be adjusted by the individual physician in the event of any contraindications. It is generally preferred that a maximum dose of the pharmacological agents of the invention (alone or in combination with other therapeutic agents) be used, that is, the highest safe dose according to sound medical judgment. It will be understood by those of ordinary skill in the art however, that a patient may insist upon a lower dose or tolerable dose for medical reasons, psychological reasons or for virtually any other reasons.

A response to a therapeutically effective dose of a disclosed drug delivery composition can be measured by determining the physiological effects of the treatment or medication, such as the decrease or lack of disease symptoms following the administration of the treatment or pharmacological agent. Other assays will be known to one of ordinary skill in the art and can be employed for measuring the level of the response. The amount of a treatment may be varied for example by increasing or decreasing the amount of a disclosed compound and/or pharmaceutical composition, by changing the disclosed compound and/or pharmaceutical composition administered, by changing the route of administration, by changing the dosage timing and so on. Dosage can vary, and can be administered in one or more dose administrations daily, for one or several days. Guidance can be found in the literature for appropriate dosages for given classes of pharmaceutical products.

As used herein, the term "prophylactically effective amount" refers to an amount effective for preventing onset or initiation of a disease or condition.

As used herein, the term "prevent" or "preventing" refers to precluding, averting, obviating, forestalling, stopping, or hindering something from happening, especially by advance action. It is understood that where reduce, inhibit or prevent are used herein, unless specifically indicated otherwise, the use of the other two words is also expressly disclosed.

As used herein, the terms "optional" or "optionally" means that the subsequently described event or circumstance can or cannot occur, and that the description includes instances where said event or circumstance occurs and instances where it does not.

As used interchangeably herein, "subject," "individual," or "patient" can refer to a vertebrate organism, such as a mammal (e.g. human). "Subject" can also refer to a cell, a population of cells, a tissue, an organ, or an organism, preferably to human and constituents thereof.

As used herein, the terms "treating" and "treatment" can refer generally to obtaining a desired pharmacological and/or physiological effect. The effect can be, but does not necessarily have to be, prophylactic in terms of preventing or partially preventing a disease, symptom or condition thereof. The effect can be therapeutic in terms of a partial or complete cure of a disease, condition, symptom, or adverse effect attributed to the disease, disorder, or condition. The term "treatment" as used herein can include any treatment of a disease disorder in a subject, particularly a human, and can include any one or more of the following: (a) preventing the disease from occurring in a subject which may be predisposed to the disease but has not yet been diagnosed as having it; (b) inhibiting the disease, i.e., arresting its development; and (c) relieving the disease, i.e., mitigating or ameliorating the disease and/or its symptoms or conditions. The term "treatment," as used herein, can refer to both therapeutic treatment alone, prophylactic treatment alone, or both therapeutic and prophylactic treatment. Those in need of treatment (subjects in need thereof) can include those already with the disorder and/or those in which the disorder is to be prevented. As used herein, the term "treating" can include inhibiting the disease, disorder, or condition, e.g., impeding its progress, and relieving the disease, disorder, or condition, e.g., causing regression of the disease, disorder, and/or condition. Treating the disease, disorder, or condition can include ameliorating at least one symptom of the particular disease, disorder, or condition, even if the underlying pathophysiology is not affected, e.g., such as treating the pain of a subject by administration of an analgesic agent even though such agent does not treat the cause of the pain.

As used herein, "dose," "unit dose," or "dosage" can refer to physically discrete units suitable for use in a subject, each unit containing a predetermined quantity of a disclosed compound and/or a pharmaceutical composition thereof calculated to produce the desired response or responses in association with its administration.

As used herein, "therapeutic" can refer to treating, healing, and/or ameliorating a disease, disorder, condition, or side effect or to decreasing the rate of advancement of a disease, disorder, condition, or side effect.

### HYDROGELS

In some aspects, disclosed herein is a hydrogel formable to deliver a cargo to a tubular epithelial structure, the hydrogel formed by: a) preparing a hydrogel precursor including the cargo; b) applying the hydrogel precursor to the tubular epithelial structure through a lumen of said tubular epithelial structure; and c) curing the hydrogel precursor, thereby forming a hydrogel comprising the cargo; wherein the hydrogel degrades over time, thereby releasing the cargo to the tubular epithelial structure.

As used herein, the term "tubular epithelial structure" refers to any organ or anatomical structure which includes a lumen and epithelial cells. A tubular epithelial structure can include any combination of epithelial cell types and arrangements, for example, squamous epithelial cells, cuboidal epithelial cells, columnar epithelial cells, simple epithelium, stratified epithelium, transitional epithelium, tubular epithelial cells, or luminal epithelial cells.

In some aspects, the tubular epithelial structure can be a small intestine, a large intestine, an esophagus, a stomach, a colon, an artery, a vein, a renal tubule, a ureter, a urinary bladder, a urethra, a fallopian tube, a pancreatic duct, a bile duct, or a uterus. In some aspects, the tubular epithelial structure can be healthy. In some aspects, the tubular epithelial structure can be injured and/or diseased.

In some aspects, the hydrogel precursor can include any multi-armed or branched macromer, polymer, or macromolecule with at least one light-reactive group. In some aspects, the hydrogel precursor can include a hydrolyzable macromer. For example, in some aspects, the hydrogel precursor can include a poly(ethylene glycol) (PEG) macromer. In some aspects, the hydrogel precursor can include a 4 arm norbornene-terminated poly(ethylene glycol) (PEG-4NB) macromer, an 8 arm norbornene-terminated poly(ethylene glycol) with ester linkage (PEG-8eNB) macromer, an 8 arm norbornene-terminated poly(ethylene glycol) with amide linkage (PEG-8aNM) macromer, or any combination thereof.

In some aspects, the hydrogel precursor comprises a degradable crosslinker. For example, in some aspects, the hydrogel precursor can include a hydrolyzable crosslinker, a protease degradable crosslinker, or any combination thereof. In some aspects, the crosslinker can include one or more esters, carbonates, and/or hydrazones. In some aspects, the crosslinker can include a protease-degradable peptide having one or more sequences including GPQW, VPM, and/or IPES.

In some aspects, the cargo can include a small molecule, a peptide, a nucleic acid, a cell, or any combination thereof. In some aspects, the cargo can include stem cells. In some aspects, the cargo can include epithelial cells, mesenchymal stem cells, endothelial cells, and/or enteric nerves. In some aspects, the cargo can include one or more anti-inflammatory agents.

In some aspects, the cargo can include organoids or fragments thereof. In some aspects, the organoids or fragments thereof can be human. In some aspects, the organoids or fragments thereof can be specific for the tubular epithelial structure to which the hydrogel is applied. For example, in some aspects, when the tubular epithelial structure is a small intestine or large intestine, the cargo can include human intestinal organoids or fragments thereof.

In some aspects, the cargo can make up greater than 0% of the hydrogel precursor by volume (e.g., about 1% or more, about 2% or more, about 3% or more, about 4% or more, about 5% or more, about 10% or more, about 15% or more, about 20% or more, about 25% or more, about 30% or more, about 35% or more, about 40% or more, about 45% or more, about 50% or more, about 55% or more, about 60% or more, about 65% or more, about 70% or more, about 75% or more, about 80% or more, about 85% or more, about 90% or more). In some aspects, the cargo can make up about 90% or less of the hydrogel precursor by volume (e.g., about 85% or less, about 80% or less, about 75% or less, about 70% or less, about 65% or less, about 60% or less, about 55% or less, about 50% or less, about 45% or less, about 40% or less, about 35% or less, about 30% or less, about 25% or less, about 20% or less, about 15% or less, about 10% or less, about 5% or less, about 4% or less, about 3% or less, about 2% or less, about 1% or less, about 0% or less).

The cargo can make up any amount of the hydrogel precursor ranging from any of the minimum values described above to any of the maximum values described above. For example, in some aspects, the cargo can make up from greater than 0% to about 90% of the hydrogel precursor by volume (e.g., from about 1% to about 85%, from about 2% to about 80%, from about 3% to about 75%, from about 4% to about 70%, from about 5% to about 65%, from about 10% to about 60%, from about 15% to about 55%, from about 20% to about 50%, from about 25% to about 45%, from about 30% to about 40%, from about 0% to about 35%, from about 1% to about 30%, from about 2% to about 25%, from about 3% to about 20%, from about 4% to about 15%, from about 5% to about 10%, from about 35% to about 90%, from about 40% to about 85%, from about 45% to about 80%, from about 50% to about 75%, from about 55% to about 70%, from about 60% to about 65%).

In some aspects, the hydrogel can adhere to the internal surface of the tubular epithelial structure, thereby securing the hydrogel in place as the cargo is released over time.

In some aspects, the hydrogel can be formed as a hydrogel body (e.g., a hydrogel "plug" at least partially filling the internal volume of the tubular epithelial structure). In some aspects, the hydrogel body can fill only a portion of the internal volume of the tubular epithelial structure. In other aspects, the hydrogel body can fill the entire internal volume of the tubular epithelial structure. In some aspects, the hydrogel body can at least partially or completely reduce flow through the tubular epithelial structure upon administration, and flow can be restored as the hydrogel body degrades.

In some aspects, the hydrogel can be formed as a hydrogel coating on an internal surface of the tubular epithelial structure. In some aspects, the hydrogel coating can have a thickness of about 10 µm or more (e.g., about 20 µm or more, about 30 µm or more, about 40 µm or more, about 50 µm or more, about 75 µm or more, about 100 µm or more, about 150 µm or more, about 200 µm or more, about 250 µm or more, about 300 µm or more, about 350 µm or more, about 400 µm or more, about 450 µm or more, about 500 µm or more, about 600 µm or more, about 700 µm or more, about 800 µm or more, about 900 µm or more, about 1 mm or more). In some aspects, the hydrogel coating can have a thickness of about 1 mm or less (e.g., about 900 µm or less, about 800 µm or less, about 700 µm or less, about 600 µm or less, about 500 µm or less, about 450 µm or less, about 400 µm or less, about 350 µm or less, about 300 µm or less, about 250 µm or less, about 200 µm or less, about 150 µm or less, about 100 µm or less, about 75 µm or less, about 50 µm or less, about 40 µm or less, about 30 µm or less, about 20 µm or less, about 10 µm or less).

The hydrogel coating can have a thickness ranging from any of the minimum values described above to any of the maximum values described above. For example, in some aspects, the hydrogel coating can have a thickness of from about 10 µm to about 1 mm (e.g., from about 20 µm to about 900 µm, from about 30 µm to about 800 µm, from about 40 µm to about 700 µm, from about 50 µm to about 600 µm, from about 75 µm to about 500 µm, from about 100 µm to about 450 µm, from about 150 µm to about 400 µm, from about 200 µm to about 350 µm, from about 250 µm to about 300 µm, from about 10 µm to about 300 µm, from about 20 µm to about 250 µm, from about 30 µm to about 200 µm, from about 40 µm to about 150 µm, from about 50 µm to about 100 µm, from about 250 µm to about 1 mm, from about 300 µm to about 900 µm, from about 350 µm to about 800 µm, from about 400 µm to about 700 µm, from about 450 µm to about 600 µm).

In some aspects, about 90% or more (e.g., about 91% or more, about 92% or more, about 93% or more, about 94% or more, about 95% or more, about 96% or more, about 97% or more, about 98% or more, about 99% or more, about 100%) of the hydrogel can degrade after from about 12 hours to about 96 hours after step c) is conducted. In some aspects, about 100% or less (e.g., about 99% or less, about 98% or less, about 97% or less, about 96% or less, about 95% or less, about 94% or less, about 93% or less, about 92% or less, about 91% or less, about 90% or less) of the hydrogel can degrade after from about 12 hours to about 96 hours after step c) is conducted.

Any amount of the hydrogel ranging from any of the minimum values described above to any of the maximum values described above can degrade after from about 12 hours to about 96 hours after step c) is conducted. For example, in some aspects, from about 90% to about 100% (e.g., from about 91% to about 99%, from about 92% to about 98%, from about 93% to about 97%, from about 94% to about 96%, from about 90% to about 95%, from about 91% to about 94%, from about 92% to about 93%, from about 95% to about 100%, from about 96% to about 99%, from about 97% to about 98%) of the hydrogel can degrade after from about 12 hours to about 96 hours after step c) is conducted.

In some aspects, from about 90% to about 100% of the hydrogel can degrade after about 12 hours or more (e.g., about 16 hours or more, about 20 hours or more, about 24 hours or more, about 32 hours or more, about 40 hours or more, about 48 hours or more, about 60 hours or more, about 72 hours or more, about 84 hours or more, about 96 hours or more) after step c) is conducted. In some aspects, from about 90% to about 100% of the hydrogel can degrade after about 96 hours or less (e.g., about 84 hours or less, about 72 hours or less, about 60 hours or less, about 48 hours or less, about 40 hours or less, about 32 hours or less, about 24 hours or less, about 20 hours or less, about 16 hours or less, about 12 hours or less) after step c) is conducted.

From about 90% to about 100% of the hydrogel can degrade in any amount of time after step c) is conducted ranging from any of the minimum values described above to any of the maximum values described above. For example, in some aspects, from about 90% to about 100% of the hydrogel can degrade in from about 12 hours to about 96 hours (e.g., from about 16 hours to about 84 hours, from about 20 hours to about 72 hours, from about 24 hours to about 60 hours, from about 32 hours to about 48 hours, from about 12 hours to about 40 hours, from about 16 hours to about 32 hours, from about 20 hours to about 24 hours, from about 40 hours to about 96 hours, from about 48 hours to about 84 hours, from about 60 hours to about 72 hours) after step c) is conducted.

In some aspects, step b) can include injecting the hydrogel precursor into the lumen, thereby at least partially filling the lumen with the hydrogel. In some aspects, step b) can include spraying the hydrogel precursor onto an internal surface of the tubular epithelial structure through the lumen.

In some aspects, step c) can include exposing the hydrogel precursor to light, for example, visible light or UV light.

In some aspects, step c) can include exposing the hydrogel precursor to an irradiance of about 0.1 mW/cm² or more (e.g., about 0.2 mW/cm² or more, about 0.3 mW/cm² or more, about 0.4 mW/cm² or more, about 0.5 mW/cm² or more, about 1 mW/cm² or more, about 1.5 mW/cm² or more, about 2 mW/cm² or more, about 3 mW/cm² or more, about 4 mW/cm² or more, about 5 mW/cm² or more, about 10 mW/cm² or more, about 15 mW/cm² or more, about 20 mW/cm² or more, about 25 mW/cm² or more, about 30 mW/cm² or more, about 35 mW/cm² or more, about 40 mW/cm² or more, about 45 mW/cm² or more, about 50 mW/cm² or more). In some aspects, step c) can include exposing the hydrogel precursor to an irradiance of about 50 mW/cm² or less (e.g., about 45 mW/cm² or less, about 40 mW/cm² or less, about 35 mW/cm² or less, about 30 mW/cm² or less, about 25 mW/cm² or less, about 20 mW/cm² or less, about 15 mW/cm² or less, about 10 mW/cm² or less, about 5 mW/cm² or less, about 4 mW/cm² or less, about 3 mW/cm² or less, about 2 mW/cm² or less, about 1.5 mW/cm² or less, about 1 mW/cm² or less, about 0.5 mW/cm² or less, about 0.4 mW/cm² or less, about 0.3 mW/cm² or less, about 0.2 mW/cm² or less, about 0.1 mW/cm² or less).

Step c) can include exposing the hydrogel precursor to an irradiance ranging from any of the minimum values described above to any of the maximum values described above. For example, in some aspects, step c) can include exposing the hydrogel precursor to an irradiance of from about 0.1 mW/cm² to about 50 mW/cm² (e.g., from about 0.2 mW/cm² to about 45 mW/cm², from about 0.3 mW/cm² to about 40 mW/cm², from about 0.4 mW/cm² to about 35 mW/cm², from about 0.5 mW/cm² to about 30 mW/cm², from about 1 mW/cm² to about 25 mW/cm², from about 1.5 mW/cm² to about 20 mW/cm², from about 2 mW/cm² to about 15 mW/cm², from about 3 mW/cm² to about 10 mW/cm², from about 4 mW/cm² to about 5 mW/cm², from about 0.1 mW/cm² to about 5 mW/cm², from about 0.2 mW/cm² to about 4 mW/cm², from about 0.3 mW/cm² to about 3 mW/cm², from about 0.4 mW/cm² to about 2 mW/cm², from about 0.5 mW/cm² to about 1.5 mW/cm², from about 4 mW/cm² to about 50 mW/cm², from about 5 mW/cm² to about 45 mW/cm², from about 10 mW/cm² to about 40 mW/cm², from about 15 mW/cm² to about 35 mW/cm², from about 20 mW/cm² to about 30 mW/cm²).

In some aspects, step c) can include exposing the hydrogel precursor to light using a light source external to the tubular epithelial structure. For example, in some aspects, if the hydrogel precursor is injected into the lumen, this can form a hydrogel body within the lumen (e.g., a hydrogel "plug" at least partially filling the internal volume of the tubular epithelial structure). In some aspects, if the hydrogel precursor is sprayed onto the internal surface of the tubular epithelial structure, this can form a hydrogel coating on the internal surface of the tubular epithelial structure.

In some aspects, step c) can include exposing the hydrogel precursor to light using a light source deposited within the lumen, thereby forming a hydrogel coating on an internal surface of the tubular epithelial structure. In some such aspects, the hydrogel precursor can either be injected into the lumen and displaced by the light source or sprayed onto the internal surface of the tubular epithelial structure.

### METHODS

In some aspects, disclosed herein is a method of delivering a cargo to a tubular epithelial structure, the method including: a) preparing a hydrogel precursor including the cargo; b) applying the hydrogel precursor to the tubular epithelial structure through a lumen of said tubular epithelial structure; and c) curing the hydrogel precursor, thereby forming a hydrogel comprising the cargo; wherein the hydrogel degrades over time, thereby releasing the cargo to the tubular epithelial structure.

In some aspects, the tubular epithelial structure can be a small intestine, a large intestine, an esophagus, a stomach, a colon, an artery, a vein, a renal tubule, a ureter, a urinary bladder, a urethra, a fallopian tube, a pancreatic duct, a bile duct, or a uterus. In some aspects, the tubular epithelial structure can be healthy. In some aspects, the tubular epithelial structure can be injured and/or diseased.

In some aspects, the hydrogel precursor can include any multi-armed or branched macromer, polymer, or macromolecule with at least one light-reactive group. In some aspects, the hydrogel precursor can include a hydrolyzable macromer. For example, in some aspects, the hydrogel precursor can include a poly(ethylene glycol) (PEG) macromer. In some aspects, the hydrogel precursor can include a 4 arm norbornene-terminated poly(ethylene glycol) (PEG-4NB) macromer, an 8 arm norbornene-terminated poly(ethylene glycol) with ester linkage (PEG-8eNB) macromer, an 8 arm norbornene-terminated poly(ethylene glycol) with amide linkage (PEG-8aNM) macromer, or any combination thereof.

In some aspects, the hydrogel precursor comprises a degradable crosslinker. For example, in some aspects, the hydrogel precursor can include a hydrolyzable crosslinker, a protease degradable crosslinker, or any combination thereof. In some aspects, the crosslinker can include one or more esters, carbonates, and/or hydrazones. In some aspects, the crosslinker can include a protease-degradable peptide having one or more sequences including GPQW, VPM, and/or IPES.

In some aspects, the cargo can include a small molecule, a peptide, a nucleic acid, a cell, or any combination thereof. In some aspects, the cargo can include stem cells. In some aspects, the cargo can include epithelial cells, mesenchymal stem cells, endothelial cells, and/or enteric nerves. In some aspects, the cargo can include one or more anti-inflammatory agents.

In some aspects, the cargo can include organoids or fragments thereof. In some aspects, the organoids or fragments thereof can be human. In some aspects, the organoids or fragments thereof can be specific for the tubular epithelial structure to which the hydrogel is applied. For example, in some aspects, when the tubular epithelial structure is a small intestine or large intestine, the cargo can include human intestinal organoids or fragments thereof.

In some aspects, the cargo can make up greater than 0% of the hydrogel precursor by volume (e.g., about 1% or more, about 2% or more, about 3% or more, about 4% or more, about 5% or more, about 10% or more, about 15% or more, about 20% or more, about 25% or more, about 30% or more, about 35% or more, about 40% or more, about 45% or more, about 50% or more, about 55% or more, about 60% or more, about 65% or more, about 70% or more, about 75% or more, about 80% or more, about 85% or more, about 90% or more). In some aspects, the cargo can make up about 90% or less of the hydrogel precursor by volume (e.g., about 85% or less, about 80% or less, about 75% or less, about 70% or less, about 65% or less, about 60% or less, about 55% or less, about 50% or less, about 45% or less, about 40% or less, about 35% or less, about 30% or less, about 25% or less, about 20% or less, about 15% or less, about 10% or less, about 5% or less, about 4% or less, about 3% or less, about 2% or less, about 1% or less, about 0% or less).

The cargo can make up any amount of the hydrogel precursor ranging from any of the minimum values described above to any of the maximum values described above. For example, in some aspects, the cargo can make up from greater than 0% to about 90% of the hydrogel precursor by volume (e.g., from about 1% to about 85%, from about 2% to about 80%, from about 3% to about 75%, from about 4% to about 70%, from about 5% to about 65%, from about 10% to about 60%, from about 15% to about 55%, from about 20% to about 50%, from about 25% to about 45%, from about 30% to about 40%, from about 0% to about 35%, from about 1% to about 30%, from about 2% to about 25%, from about 3% to about 20%, from about 4% to about 15%, from about 5% to about 10%, from about 35% to about 90%, from about 40% to about 85%, from about 45% to about 80%, from about 50% to about 75%, from about 55% to about 70%, from about 60% to about 65%).

In some aspects, the hydrogel can adhere to the internal surface of the tubular epithelial structure, thereby securing the hydrogel in place as the cargo is released over time.

In some aspects, the hydrogel can be formed as a hydrogel body (e.g., a hydrogel "plug" at least partially filling the internal volume of the tubular epithelial structure). In some aspects, the hydrogel body can fill only a portion of the internal volume of the tubular epithelial structure. In other aspects, the hydrogel body can fill the entire internal volume of the tubular epithelial structure. In some aspects, the hydrogel body can at least partially or completely reduce flow through the tubular epithelial structure upon administration, and flow can be restored as the hydrogel body degrades.

In some aspects, the hydrogel can be formed as a hydrogel coating on an internal surface of the tubular epithelial structure. In some aspects, the hydrogel coating can have a thickness of about 10 µm or more (e.g., about 20 µm or more, about 30 µm or more, about 40 µm or more, about 50 µm or more, about 75 µm or more, about 100 µm or more, about 150 µm or more, about 200 µm or more, about 250 µm or more, about 300 µm or more, about 350 µm or more, about 400 µm or more, about 450 µm or more, about 500 µm or more, about 600 µm or more, about 700 µm or more, about 800 µm or more, about 900 µm or more, about 1 mm or more). In some aspects, the hydrogel coating can have a thickness of about 1 mm or less (e.g., about 900 µm or less, about 800 µm or less, about 700 µm or less, about 600 µm or less, about 500 µm or less, about 450 µm or less, about 400 µm or less, about 350 µm or less, about 300 µm or less, about 250 µm or less, about 200 µm or less, about 150 µm or less, about 100 µm or less, about 75 µm or less, about 50 µm or less, about 40 µm or less, about 30 µm or less, about 20 µm or less, about 10 µm or less).

The hydrogel coating can have a thickness ranging from any of the minimum values described above to any of the maximum values described above. For example, in some aspects, the hydrogel coating can have a thickness of from about 10 µm to about 1 mm (e.g., from about 20 µm to about 900 µm, from about 30 µm to about 800 µm, from about 40 µm to about 700 µm, from about 50 µm to about 600 µm, from about 75 µm to about 500 µm, from about 100 µm to about 450 µm, from about 150 µm to about 400 µm, from about 200 µm to about 350 µm, from about 250 µm to about 300 µm, from about 10 µm to about 300 µm, from about 20 µm to about 250 µm, from about 30 µm to about 200 µm, from about 40 µm to about 150 µm, from about 50 µm to about 100 µm, from about 250 µm to about 1 mm, from about 300 µm to about 900 µm, from about 350 µm to about 800 µm, from about 400 µm to about 700 µm, from about 450 µm to about 600 µm).

In some aspects, about 90% or more (e.g., about 91% or more, about 92% or more, about 93% or more, about 94% or more, about 95% or more, about 96% or more, about 97% or more, about 98% or more, about 99% or more, about 100%) of the hydrogel can degrade after from about 12 hours to about 96 hours after step c) is conducted. In some aspects, about 100% or less (e.g., about 99% or less, about 98% or less, about 97% or less, about 96% or less, about 95% or less, about 94% or less, about 93% or less, about 92% or less, about 91% or less, about 90% or less) of the hydrogel can degrade after from about 12 hours to about 96 hours after step c) is conducted.

Any amount of the hydrogel ranging from any of the minimum values described above to any of the maximum values described above can degrade after from about 12 hours to about 96 hours after step c) is conducted. For example, in some aspects, from about 90% to about 100% (e.g., from about 91% to about 99%, from about 92% to about 98%, from about 93% to about 97%, from about 94% to about 96%, from about 90% to about 95%, from about 91% to about 94%, from about 92% to about 93%, from about 95% to about 100%, from about 96% to about 99%, from about 97% to about 98%) of the hydrogel can degrade after from about 12 hours to about 96 hours after step c) is conducted.

In some aspects, from about 90% to about 100% of the hydrogel can degrade after about 12 hours or more (e.g., about 16 hours or more, about 20 hours or more, about 24 hours or more, about 32 hours or more, about 40 hours or more, about 48 hours or more, about 60 hours or more, about 72 hours or more, about 84 hours or more, about 96 hours or more) after step c) is conducted. In some aspects, from about 90% to about 100% of the hydrogel can degrade after about 96 hours or less (e.g., about 84 hours or less, about 72 hours or less, about 60 hours or less, about 48 hours or less, about 40 hours or less, about 32 hours or less, about 24 hours or less, about 20 hours or less, about 16 hours or less, about 12 hours or less) after step c) is conducted.

From about 90% to about 100% of the hydrogel can degrade in any amount of time after step c) is conducted ranging from any of the minimum values described above to any of the maximum values described above. For example, in some aspects, from about 90% to about 100% of the hydrogel can degrade in from about 12 hours to about 96 hours (e.g., from about 16 hours to about 84 hours, from about 20 hours to about 72 hours, from about 24 hours to about 60 hours, from about 32 hours to about 48 hours, from about 12 hours to about 40 hours, from about 16 hours to about 32 hours, from about 20 hours to about 24 hours, from about 40 hours to about 96 hours, from about 48 hours to about 84 hours, from about 60 hours to about 72 hours) after step c) is conducted.

In some aspects, step b) can include injecting the hydrogel precursor into the lumen, thereby at least partially filling the lumen with the hydrogel. In some aspects, step b) can include spraying the hydrogel precursor onto an internal surface of the tubular epithelial structure through the lumen.

In some aspects, step c) can include exposing the hydrogel precursor to light, for example, visible light or UV light.

In some aspects, step c) can include exposing the hydrogel precursor to an irradiance of about 0.1 mW/cm² or more (e.g., about 0.2 mW/cm² or more, about 0.3 mW/cm² or more, about 0.4 mW/cm² or more, about 0.5 mW/cm² or more, about 1 mW/cm² or more, about 1.5 mW/cm² or more, about 2 mW/cm² or more, about 3 mW/cm² or more, about 4 mW/cm² or more, about 5 mW/cm² or more, about 10 mW/cm² or more, about 15 mW/cm² or more, about 20 mW/cm² or more, about 25 mW/cm² or more, about 30 mW/cm² or more, about 35 mW/cm² or more, about 40 mW/cm² or more, about 45 mW/cm² or more, about 50 mW/cm² or more). In some aspects, step c) can include exposing the hydrogel precursor to an irradiance of about 50 mW/cm² or less (e.g., about 45 mW/cm² or less, about 40 mW/cm² or less, about 35 mW/cm² or less, about 30 mW/cm² or less, about 25 mW/cm² or less, about 20 mW/cm² or less, about 15 mW/cm² or less, about 10 mW/cm² or less, about 5 mW/cm² or less, about 4 mW/cm² or less, about 3 mW/cm² or less, about 2 mW/cm² or less, about 1.5 mW/cm² or less, about 1 mW/cm² or less, about 0.5 mW/cm² or less, about 0.4 mW/cm² or less, about 0.3 mW/cm² or less, about 0.2 mW/cm² or less, about 0.1 mW/cm² or less).

Step c) can include exposing the hydrogel precursor to an irradiance ranging from any of the minimum values described above to any of the maximum values described above. For example, in some aspects, step c) can include exposing the hydrogel precursor to an irradiance of from about 0.1 mW/cm² to about 50 mW/cm² (e.g., from about 0.2 mW/cm² to about 45 mW/cm², from about 0.3 mW/cm² to about 40 mW/cm², from about 0.4 mW/cm² to about 35 mW/cm², from about 0.5 mW/cm² to about 30 mW/cm², from about 1 mW/cm² to about 25 mW/cm², from about 1.5 mW/cm² to about 20 mW/cm², from about 2 mW/cm² to about 15 mW/cm², from about 3 mW/cm² to about 10 mW/cm², from about 4 mW/cm² to about 5 mW/cm², from about 0.1 mW/cm² to about 5 mW/cm², from about 0.2 mW/cm² to about 4 mW/cm², from about 0.3 mW/cm² to about 3 mW/cm², from about 0.4 mW/cm² to about 2 mW/cm², from about 0.5 mW/cm² to about 1.5 mW/cm², from about 4 mW/cm² to about 50 mW/cm², from about 5 mW/cm² to about 45 mW/cm², from about 10 mW/cm² to about 40 mW/cm², from about 15 mW/cm² to about 35 mW/cm², from about 20 mW/cm² to about 30 mW/cm²).

In some aspects, step c) can include exposing the hydrogel precursor to light using a light source external to the tubular epithelial structure. For example, in some aspects, if the hydrogel precursor is injected into the lumen, this can form a hydrogel body within the lumen (e.g., a hydrogel "plug" at least partially filling the internal volume of the tubular epithelial structure). In some aspects, if the hydrogel precursor is sprayed onto the internal surface of the tubular epithelial structure, this can form a hydrogel coating on the internal surface of the tubular epithelial structure.

In some aspects, step c) can include exposing the hydrogel precursor to light using a light source deposited within the lumen, thereby forming a hydrogel coating on an internal surface of the tubular epithelial structure. In some such aspects, the hydrogel precursor can either be injected into the lumen and displaced by the light source or sprayed onto the internal surface of the tubular epithelial structure.

In some aspects, also disclosed herein is a method of treating and/or preventing tissue damage in a subject, the method comprising conducting any of the disclosed methods within a tubular epithelial structure of the subject.

In some aspects, the subject can have an immune disease or disorder affecting one or more tubular epithelial structures. In some aspects, the subject can have a chronic disease or disorder affecting one or more tubular epithelial structures. In some aspects, for example, if the tubular epithelial structure is a small intestine or a large intestine, the subject can have inflammatory bowel disease, Crohn's disease, ulcerative colitis, and/or any other chronic gastrointestinal disease. In other aspects, for example, if the tubular epithelial structure is a bile duct, the subject can have a hepatico-biliary disease or disorder. In yet other aspects, the subject can have an ulcer.

In some aspects, the subject can have or can have been treated for cancer (e.g., colorectal cancer, esophageal cancer, stomach cancer, intestinal cancer, etc.). In some aspects, the method can be performed before administration of one or more anti-cancer treatments (e.g., chemotherapy and/or radiation) to prevent tissue damage. Additionally or alternatively, in other aspects, the method can be performed after administration of one or more anti-cancer treatments to treat, lessen, ameliorate, and/or reduce tissue damage caused by the one or more anti-cancer treatments.

In some aspects, the method can be used to protect, improve healing of, and/or prevent infection of a surgical site in a tubular epithelial structure. For example, in some aspects, the hydrogel can be formed on a surgical site in a tubular epithelial structure. In some aspects, the method can be performed during or after a surgical procedure.

### EXAMPLES

### Example 1: Synthetic hydrogel for therapeutic delivery of human intestinal organoids

A study was conducted which engineered a synthetic hydrogel formulation to effectively deliver HIO fragments to a clinically relevant intestinal epithelial injury. Through a mucosectomy procedure, the study used chemical and physical injury to denude the intestinal lining, and the hydrogel containing HIOs was photopolymerized directly onto the denuded epithelium inside the intestinal lumen. These results demonstrate that the engineered hydrogel system supports the engraftment and viability of HIOs with controlled *in vivo* degradation. The hydrogel material and its by-products are shown to be safe and a promising biomaterial for the translation of this organoid therapy.

### Methods

*Hydrogel synthesis:* Hydrogel precursor solutions were prepared using 8 arm, norbornene-terminated poly(ethylene glycol) with ester linkage macromer (20 kDa, JenKem Technologies, JKA10037); 8 arm norbornene-terminated poly(ethylene glycol) with amide linkage macromer (20 kDa, JenKem Technologies, custom synthesized); cysteine-terminated cell adhesive CRGDS peptide (aaptec, CP-L-503734-1), dithiothreitol (DTT, Invitrogen, cat. no. 15508013); and 1.0 mM lithium phenyl-2,4,6-trimethylbenzoylphosphinate (LAP, Tocris, cat. no. 6146). All solutions were prepared in 20 mM HEPES (Thermo Fisher, cat. no. 15630-080) buffer (pH=7.0) dissolved in PBS. The solutions were sterile filtered with 0.22 µm Costar Spin-X Centrifuge Tube Filters (Corning, cat. no. 8160) at 9000g for 1 min. The precursor solutions were prepared at a volumetric ratio of 2:1:1:1 corresponding to PEG:Adhesive peptide:Crosslinker:Photoiniatitor.

*Photopolymerization PEG-8NB through intestinal tissue:* Freshly isolated intestinal tissues, with or without injury, were secured with pins to a silicon isolator (round 9 mm diameter, 1.7 mm thick, Grace Bio-Labs cat. no. GBL664201), allowing UV light to pass through the tissues. Hydrogel precursor solution (10 µL) was placed under the tissue on a Parafilm-coated glass slide (see setup illustrated in **FIGS. 7A-7I****).** A distance of 2 mm between the light source and the tissue was used, and a total distance between the tissue and the hydrogel was 3.4 mm (two silicon isolators stacked together). The UV lightbox used was Silver-LED-365 (Prizmatix) coupled with a 1 mm diameter fiber optic cable (High NA Polymer Optical Fiber, outer diameter: 1mm, Core: 500 µm, NA: 0.63., Length: 1 m, Prizmatix). Irradiance (mW/cm²) was measured at a 6 mm distance from the sensor using a radiometer (UVX, Analytik Jena 97-0015-02). Hydrogels were swelled in 1X PBS overnight at 4°C and tested using a rheometer (MCR-302, AntonPaar; CP10-2) with the plate set a 37°C. Frequency sweeps (10 to 0.1 rad/s) were performed at a constant strain of 2%. Storage modulus (G') and loss modulus (G") were determined by averaging all data points acquired from 10 to 0.1 rad/s interval.

*Hydrogel degradation studies:* PEG-8eNB and PEG-8aNB hydrogels were polymerized in 70 µL PDMS custom-made cylindrical molds. For *in vitro* degradation studies, hydrogels were maintained in sterile PBS+/+ in the incubator at 37°C until the desired time point. *In vivo* degradation was evaluated using a subcutaneous implantation model. BALB/cJ male mice were placed under 2% isoflurane, and hydrogels were implanted subcutaneously in each quadrant of the dorsum. At 24 hr, 48 hr, and 72 hr, animals were euthanized, and the hydrogels were explanted. Hydrogels were placed in ultrapure water for 2 hr at room temperature in an orbital shaker to remove any debris. The hydrogels were freeze-dried with liquid nitrogen and lyophilized overnight. The weight was measured with an analytical microbalance (Mettler Toledo XPE10).

*HIO generation and culture:* HIOs were differentiated from hiPSCs, line 72.3, generated by Cincinnati Children's Hospital Medical Center under IRB-approved protocols. Briefly, cells were treated with activin-a (100 ng/mL) for 3 days (d1 media - RPM1 1640, 0% FBS, 1% P/S; d2 media- RPM1 1640, 0.2% FBS, 1% P/; d3 media- RPM1 1640, 2% FBS, 1% P/S). Cells were then cultured in day 3 media supplemented with CHIR99021 (2 µM) and FGF4 (500 ng/mL) for 4 days to produce free-floating spheroids. Collected spheroids were embedded either in Matrigel or PEG hydrogels (20-30 spheroids/bubble) and treated with Mini-Gut media (Advanced DMEM/F12 + 1% P/S + 15 mM HEPES + 2% B27 + 1% N2 + 1% GlutaMAX) supplemented with 100 ng/mL of EGF. Media was changed every 3-4 days until HIO maturation (~28 days). All the reagents are listed in **TABLE 1.**

**TABLE 1. Reagents used.**

| **HIO differentiation components** | | |
|---|---|---|
| **Item** | **Manufacturer** | **Catalog #** |
| Recombinant Human Activin A (CHO derived) | R&D Systems | 11348-AC-050 |
| Protein, CF (50 µg) | | |
| CHIR99021 - 10 mg | STEMCELL Technologies | 72052 |
| Recombinant Human FGF-4 Protein, 25 µg | R&D Systems | 235-F4-025 |
| FGF-4 - 1 mg | FUJIFILM Irvine Scientific | 100-31-1mg |
| RPMI 1640 Medium | Thermo Fischer Scientific | 11875127 |
| Hyclone degined FBS | Fischer Scientific | SH30070.02 |

| **HIO differentiation media** | | |
|---|---|---|
| Advanced DMEM/F-12 | Thermo Fischer | 12634010 |
| Recombinant Human EGF Protein 200 µg | R&D Systems | 236-EG-200 |
| B-27^{™} Supplement (50X), serum free 10 mL | Thermo Fischer | 17504044 |
| GlutaMAX^{™} Supplement - 100 mL | Thermo Fischer | 35050061 |
| HEPES (1M) Buffer Solution | Gibco Life Technologies | 15630080 |
| N-2 Supplement (100X) | Thermo Fischer Scientific | 17502-048 |

| **Matrigel^{™}** | | |
|---|---|---|
| Corning^{™} Matrigel^{™} hESC-Qualified Matrix, LDEV-free, 5 mL (for hPSC culture and differentiation) | Corning | 354277 |
| Matrigel^{™} Basement Membrane Matrix, LDEV-free, 10 mL (for embedding) | Corning | 354234 |

| hIPSC Routine Culture | | |
|---|---|---|
| Y-27632 (Dihydrochloride) Rock Inhibitor (5 mg vial) | STEMCELL Technologies | 72304 |
| mTeSR1 Complete Medium Kit | STEMCELL Technologies | 85870 |
| DMEM/F-12 | ThermoFischer Scientific | 11320033 |
| Accutase (100 mL) | STEMCELL Technologies | 7920 |
| Gentle Cell Dissociation Reagent | STEMCELL Technologies | 100-0485 |
| Y-27632 (Diydrochloride) | STEMCELL Technologies | 72304 |
| Rock Inhibitor (5 mg vial) | | |
| ACCUTASE^{™} (500 mL) | STEMCELL Technologies | 7922 |

*HIO fragmentation and viability assessment: A* 1 mL syringe was filled with mature whole HIOs and media mixture, and the solution was passed through a series of needles (18G, 20G, 21G, and 22G) to fragment HIOs. To assess *in vitro* viability, HIO fragments were mixed with hydrogel precursors, and the hydrogels were polymerized and maintained in culture with Mini Gut media supplemented with EGF for 24 hr. Calcein Violet AM (1:500, ThermoFisher Scientific C34858) and TOTO-3 Iodide (1:1000, ThermoFisher Scientific T3604) in basal media was added to cultures for 45 min before imaging. Imaging was performed with a Nikon Ti2-E motorized inverted microscope equipped with an AX-R Confocal System (laser lines: 405nm/445nm/514nm/594nm/730nm). Live cell imaging was performed in an STXG SP400 chamber maintained at 37°C and 5% CO₂. Images were processed, and the live area was calculated with ImageJ.

*Non-survival mucosectomy procedure to optimize hydrogel polymerization kinetics in vivo:* Lewis rats were placed under 2% isoflurane to anesthetize the animals. A midline incision was done, and the cecum was identified. A 2-4 cm intestinal segment was selected in the small bowel (ileum) by clamping the distal end with a bulldog clamp to isolate the segment from luminal contents while maintaining the blood flow intact, and the proximal end was sutured with a 7.0 silk to simulate the blind loop of the survival surgery. A small incision was made on the anti-mesenteric side to access the intestinal lumen to conduct the injury and hydrogel delivery. The injury was done by flowing 1.0 mM DTT solution in saline (37°C) followed by 5.0 mM EDTA solution in saline (37°C) using 10 mL and 20 mL syringes, respectively, attached to a flexible 22G tip. 50 mL of DTT solution followed by 100 mL EDTA solution were flowed through the loop. This was done for around 20 min to remove the mucosal layer. The loop was rinsed with saline before physically damaging the loop with an interdental brush by introducing the brush while twisting it inside the lumen. A final rinse with saline was done. The 250 µL precursor hydrogel solution was delivered using a 22G needle attached to a 1 mL syringe and polymerized with UV light at 100% power (20mW/cm²) for 30 s per cm tissue (60-90 s total irradiation, depending on the loop length) using a UV lightbox Silver-LED-365 (Prizmatix) coupled with a 1.0 mm diameter fiber optic cable (High NA Polymer Optical Fiber, outer diameter: 1.0 mm, Core: 500 µm, NA: 0.63., Length: 1 m, Prizmatix).

*HIO delivery to injured intestine:* RRG Rats (Rag1 and Il2rg gene deletions) were placed under 2% isoflurane, and their abdomen was shaved and prepared for surgery with isopropyl alcohol and iodine. A midline incision was made. The cecum was identified, and after visual inspection of the ileum and jejunum region, a 2-3 cm bowel segment was identified as suitable for the injury creation. An anastomosis was created to allow for the distal end of the identified loop to be connected to the bowel while the proximal end to be blinded. A bulldog clamp was placed at the distal end of the loop to limit the flow to the rest of the bowel. The injury was created by flowing 1.0 mM DTT solution in saline (37°C) followed by 5.0 mM EDTA solution in saline (37°C) using 10 mL and 20 mL syringes, respectively, attached to a flexible 22G tip. 50 mL of DTT solution followed by 100 mL EDTA solution were flowed through the loop. This was done for around 20 min to remove the mucosal layer. The loop was rinsed with saline before physically damaging the loop with an interdental brush by introducing the brush while twisting it inside the lumen. A final rinse with saline was done. A 4.0 chromic gut suture was placed at the distal end of the loop, and a 7.0 silk suture was placed at the proximal end of the loop after HIO delivery.

For media delivery, 6 HIOs were fragmented and delivered to the intestinal loop in ~300-500 µL of media using a 22G flexible tip attached to a 1 mL syringe. The delivery volume was adjusted based on the intestinal loop dimensions. For hydrogel delivery, 300 µL PEG + HIO solution (180 µL hydrogel precursor + 120 µL of media containing fragmented HIOs) was prepared, and ~250 µL was delivered to the intestinal loop using a 22G flexible tip attached to a 1 mL syringe. A final dose of 6 HIOs was included in the injected volume (see FIG. 17 for calculations). The intestinal loop was exposed to UV light at 100% power (20mW/cm²) for 30 s per cm tissue (60-90 s total irradiation, depending on the loop length) using a UV lightbox Silver-LED-365 (Prizmatix) coupled to a 1 mm diameter fiber optic cable (High NA Polymer Optical Fiber, outer diameter: 1mm, Core: 500 µm, NA: 0.63., Length: 1 m, Prizmatix).

*Histology and immunofluorescence analysis:* After euthanasia, intestinal tissues were collected and fixed in 4% paraformaldehyde overnight. Tissues were washed with PBS and placed in 100% ethanol maintained at 4°C before processing and paraffin embedding. Paraffin-embedded tissues were sectioned with a microtome at 5µm sections. Deparaffinization and hematoxylin and eosin (H&E) staining were done with a Leica Autostainer XL. For immunofluorescence staining, deparaffined slides were subjected to antigen retrieval using citrate buffer followed by blocking and permeabilization. The primary antibody was incubated overnight at 4°C, and the secondary antibody with nuclear counterstain was incubated for 2 hr at room temperature. Antibodies used are listed in **TABLE 2**. Brightfield H&E images were taken with a Zeiss AxioObserver Z1 Fluorescence Microscope equipped with a Zeiss AxioCam Color camera. Immunofluorescence images were taken with the Nikon Ti2-E motorized inverted microscope equipped with an AX-R Confocal System (laser lines: 405nm/445nm/514nm/594nm/730nm). All the image quantifications were done with CellProfiler 4.2.1 software.

**TABLE 2. Immunostaining markers used.**

| **Primary antibodies** | **Dilution/Concentration** | **Manufacturer** | **Catalog #** |
|---|---|---|---|
| Human KU-80 | 1:200 | Cell Signaling Technologies | 2180 |
| Human CDX2 | 1:300 | Biogenex | CDX2-88 |
| E-cadherin (CDH1) | 1:500 | Biolegend | 610181 |
| Alpha-smooth muscle actin monoclonal antibody | 1:200 | Invitrogen | MA1-06110 |

| **Secondary antibodies** | **Dilution** | **Manufacturer** | **Catalog #** |
|---|---|---|---|
| Donkey anti-rabbit AF568 | 1:500 | Invitrogen | A10042 |
| Donkey anti-mouse AF647 | 1:500 | Invitrogen | A31571 |

| **Isotypes control** | **Dilution** | **Manufacturer** | **Catalog #** |
|---|---|---|---|
| Mouse IgG1k | 1:300 | ThermoFischer Scientific | 14-4714-82 |
| Mouse IgG2a | 1:200 | Santa Cruz Antibodies | Sc-3878 |
| Rabbit IgG | 1:200 | Biolegend | 910801 |

*Statistical analysis:* The statistical analysis was performed using GraphPad Prism (version 8.1.1). To evaluate differences among groups, nested ANOVA or nested t-test was used to capture variations between replicates. Two-way ANOVA was used to study differences among multiple experimental groups of analysis.

*Hydrogel thickness measurement:* Rat Ileum intestinal segments (~2-4 cm) were thawed on ice. Varying volume (10-20µL/cm tissue) of precursor hydrogel solution (4% PEG-4NB 2mM RGD GPQW) conjugated with 0.5mM FITC-PEG-SH molecule was introduced to the intestinal lumen, followed by the UV lightguide enclosed in the 13G feeding tube (polypropylene, Instech laboratories cat. no. FTP-13-150). See schematic in **FIG. 18****.** The hydrogel was polymerized with 100% power (I=5.13mW/cm²) at 30s per cm of tissue. The intestine was cut longitudinally and placed in 2 well chambered cover well with PBS with hydrogel facing down. Z-stack with 10µm slice thickness was taken at different points in the tissue with confocal microscope. Images were processed with ImageJ.

*Hydrogel coating adhesion to the tissue:* Fresh rat ileum intestinal segments (~2-4 cm) were isolated collected from terminal procedures. The chemical and physical injury was conducted on the segments *ex vivo* for the injured segment. The naive segment was flushed with PBS to remove the luminal contents. The 4% PEG-4NB hydrogel precursor solution was prepared with FluoSpheres^{™} Polystyrene Microspheres (d=10 µm, Thermo Fisher Scientific, cat. no. F8831) at a 3x10⁵ beads/mL concentration suspended in PBS. A total of 20µL/cm of tissue of hydrogel precursor solution was added to the lumen, then polymerized with the UV lightguide enclosed in the 13G feeding tube (polypropylene, Instech laboratories cat. no. FTP-13-150) with 100% power (I=5.13mW/cm²) at 30s per cm of tissue. The intestine segment was flushed with PBS. The intestine was cut longitudinally and placed in 2 well chambered cover well with PBS with hydrogel facing down. The resulting intestinal coating was imaged using the confocal microscope. Images were processed with ImageJ.

### Results

*Hydrogel in situ polymerization methods for intestinal delivery:* This study sought to engineer a synthetic hydrogel capable of delivering HIOs to the injured rat intestine *in vivo.* Previous work utilized maleimide-functionalized hydrogel for direct injection, *in situ* polymerization, and delivery of HIOs to small mucosal wounds in the mouse colon [8], [152]. Although successful in treating these focal wounds, this hydrogel delivery strategy is not translatable to treating large (> 1 cm) wounds in the exposed intestine because of the rapid polymerization kinetics. Here, the study modified this delivery technology to cover a large (> 1cm) section of the exposed intestinal lumen in a clinically relevant animal model. In this model, chemical and physical injury is applied to a segment (2-3 cm) of the small intestine of immunodeficient RRG rats to remove the intestinal epithelium (mucosectomy) and recreate a localized intestinal injury. For this model, the rapid gelation mechanism of the PEG-maleimide hydrogel limits uniform gel application over the entire exposed tissue. Therefore, the study engineered a photopolymerizable hydrogel composed of PEG macromer terminated with norbornene groups (PEG-NB). In contrast to the PEG-maleimide system that polymerizes when the precursor solution mixes with the crosslinker, the PEG-NB hydrogel remains as a liquid solution until exposed to UV light, which triggers polymerization. This strategy offers the ability to apply the hydrogel precursor solution over the intestinal injury in a controllable and reproducible fashion.

The study designed two different hydrogel delivery strategies, which offer versatile opportunities to treat different intestinal injuries. For both strategies, the study used a 365 nm LED UV light box connected to a 1.0 mm outer diameter fiber optic lightguide cable to spatially control UV exposure **(****FIG. 1A****).** In the internal polymerization method, the lightguide cable is placed inside the intestinal lumen to directly irradiate the hydrogel precursor solution in contact with intestinal tissue, whereas in the external polymerization method, the lightguide cable is placed outside the tissue to expose UV light through the intestinal tissue to polymerize the hydrogel solution in the intestine lumen **(****FIG. 1B, FIG. 1G****).** The study conducted pilot *in vivo* experiments with injured rats and rhodamine-labeled hydrogels. In the internal polymerization method, the hydrogel precursor solution is added between the intestinal tissue and a clear polystyrene plastic feeding tube holding the lightguide cable creating a uniform, thin hydrogel coating adhering to the mucosal surface throughout the entire tissue segment **(****FIGS. 1C-1D****).** The study confirmed the robustness of this method with *ex vivo* mouse and pig intestinal tissue **(****FIGS. 1E-1F****).** In the external polymerization method, the polymerized hydrogel forms a plug inside the intestinal cavity **(****FIGS. 1G-1I****).** Due to the size constraints of the rat intestine and the fragile tissue post-injury, the study selected the external polymerization method for subsequent experiments. However, the internal polymerization method may be attractive for larger preclinical models or transitioning into clinical studies.

*Optimizing the hydrogel formulation and degradation kinetics:* For the internal polymerization method, the study first examined a 4% hydrogel using 4-arm PEG Norbornene (PEG-4NB) macromer functionalized with RGD adhesive ligand (2.0 mM) and crosslinked with protease degradable crosslinker GPQW. This formulation was based on the previous PEG-maleimide hydrogel formulation that supported HIO viability and development [8]. Given the setup for the internal polymerization method, the study tested the irradiance of the UV lightguide parallel to the radiometer sensor and enclosed in the polypropylene feeding tube **(****FIG. 2A****).** The resulting value for 100% power was 5 mW/cm² **(****FIG. 2B****).** The study examined hydrogel polymerization while the UV lightguide was placed parallel to the hydrogel droplet varying the exposure time (30s and 60s) and power (50% and 100%) and measuring the resulting storage modulus (G') of the polymerized hydrogels. When the hydrogels were formed at 50% power and 30 s, they exhibited lower G' values across all groups **(****FIG. 2C****).**

The study assessed whether these *in situ* polymerized hydrogels resulted in changes to HIO fragment viability at varying UV power and time conditions. Mature HIOs (d28) were fragmented through mechanical trituration using a series of increasing needle gauges (reducing needle internal diameter) until small HIO fragments were achieved following the same protocol for the *in vivo* studies. At 24 hr post encapsulation, HIO viability was similar in the hydrogels polymerized with 100% power (5 mW/cm²) for 30 seconds when compared to the MatrigelTM control group, while the rest of the groups exhibited lower viability **(****FIGS. 3A-3B****).** The study selected 100% power (5 mW/cm²) and 30 s exposure time as the optimal UV conditions for the internal polymerization method.

In addition, the study evaluated the coating thickness and the adhesion to tissue of the resulting hydrogel film. The thickness measurement was achieved by measuring the fluorescence depth of FITC-conjugated PEG coating using z-stacks with confocal microscopy **(****FIGS. 4A-4D****).** The study estimated the hydrogel coating thickness of 200 and 400 µm for hydrogel delivery volumes of 10 and 20 µL/cm of tissue, respectively. To assess the hydrogel adhesion to the tissue, freshly isolated rat bowel segments were injured *ex vivo* following the mucosectomy protocol and compared to naive tissue after PEG-4NB hydrogel delivery using the optimized polymerization conditions (UV power 100%, 30 s exposure, 20 µL/cm volume). Fluorescence plastic microbeads (d =10µm) were incorporated into the liquid hydrogel precursor solution to visualize the presence of the hydrogel after polymerization. After the hydrogel was polymerized, PBS was flowed through the intestine to remove any unbound matrix, and the resulting tissue+hydrogel was imaged using confocal microscopy. The results showed a higher presence of fluorescence microbeads when the hydrogel was delivered in the injured tissues compared to the naive tissue (FIG. 5). The presence of the mucosal layer in the naive tissue likely prevents the hydrogel from adhering to the intestinal wall.

For the external polymerization method, the PEG-4NB formulation engineered for the internal polymerization method did not polymerize after exposing UV light through tissue at the same UV power and time **(****FIGS. 6A-6B****).** It was hypothesized that the poor gelation resulted from insufficient density of norbornene (NB) reactive groups and attenuated UV irradiation due to the tissue. The study, therefore, tested an 8-arm PEG-NB (PEG-8NB) functionalized with RGD adhesive ligand (2.0 mM) and crosslinked with a non-degradable DTT crosslinker **(****FIG. 7A****).** The study tested hydrogel polymerization through the tissue with the setup illustrated on **FIG. 7B****,** where freshly isolated injured and naive intestinal tissues were secured with pins to a silicon isolator. Measuring the UV irradiance through the tissue demonstrated that the tissue attenuated ~90% of the UV light **(****FIG. 7C****).** At 100% power with this setup, the irradiance for no tissue (control) was 20 mW/cm² while it was 1.73 mW/cm² for naive tissue and 1.42 mW/cm² for naive tissue. The slightly lower value for injured tissue likely reflects the presence of blood in the injured tissue. The study then compared hydrogel storage modulus (G') values measured after varying UV power at a constant time and varying exposure time at a constant UV power for no tissue, naive, and injured tissue **(****FIGS. 7D-7E****).** The storage modulus across varying power and times follows the similar trend observed in the irradiance values; the highest storage modulus value corresponds to hydrogel polymerized without tissue, followed by naive tissue, and then finally injured tissue. These studies show that power of at least 10% (exposure time 30s) is needed to polymerize the hydrogel through the tissue while only 0.30% power polymerizes the hydrogel without the presence of tissue. In terms of exposure time, at least 10 s are needed to polymerize the hydrogel through the tissue. The study compared the hydrogel storage modulus and loss modulus values obtained after polymerizing only with injured tissue across exposure times and UV power **(****FIGS. 7F-7G****).** The study selected a 100% power (20 mW/cm²) and 30 s exposure time since it resulted in the highest storage and loss modulus (G' average = 296.70 ± 32.32 Pa, G" average = 19.96 ± 3.45 Pa) after photopolymerization.

Hydrogel degradation was another important optimization parameter in the design. The study selected a hydrogel formulation with an ester linkage in the hydrogel backbone (PEG-8eNB) and crosslinked with a non-degradable crosslinker, DTT. The ester linkage in PEG-NB hydrogel has been previously shown to be susceptible to esterase degradation and hydrolysis *in vivo* [107]. To study the degradation kinetics of the hydrogel, PEG- 8NB hydrogels with ester linkage (PEG-8eNB) and amide linkage (PEG-8aNB) were implanted subcutaneously in the back of BALB/cJ mice. The hydrogels were explanted every 24 hr, and the hydrogel dry mass loss over time was quantified as a measurement of degradation. These results show no changes when the hydrogels are maintained *in vitro.* There is a significant dry mass loss on ester linkage hydrogels (PEG-8eNB), but not control PEG-8aNB gels, when implanted *in vivo* **(****FIGS. 8A-8B****).** After 48 hr, the hydrogels have lost more than half the original weight. These results demonstrate that PEG-8eNB hydrogel undergoes hydrolytic degradation controlled by the ester linkage, supporting rapid *in vivo* degradation.

Finally, the study tested if the PEG-8NB hydrogel formulation could support HIO fragment viability. These HIO were embedded in PEG-8eNB crosslinked with DTT, PEG-8aNB crosslinked with DTT, PEG-8eNB crosslinked with GPQW (protease degradable crosslinker), and Matrigel^{™} (control) **(****FIGS. 9A-9D****).** After 24 hr, HIO fragment viability in all hydrogel groups was comparable to Matrigel^{™} **(****FIG. 9E****).** The PEG-8eNB DTT formulation was hypothesized to fully degrade over 3 days *in vivo,* support HIO fragment viability and serve as matrix releasing the HIO fragments for attachment to the injured intestinal wall.

*PEG-8eNB hydrogel HIO delivery to injured intestine:* After optimizing the hydrogel parameters *in vitro,* the study tested whether the hydrogel could polymerize *in vivo* under injury conditions through non-survival surgery using Lewis rats. The study recreated the chemical and physical injury on a small intestinal segment isolated from the intestinal continuity using a bulldog clamp and a 7.0 silk suture **(****FIG. 10A****).** A small incision was done on the anti-mesenteric side to access the intestinal lumen to conduct the injury and hydrogel delivery **(****FIG. 10B****).** From the optimization experiment **(****FIGS. 7A-7I****),** the study selected 100% power (20 mW/cm²) and 30 s exposure time per cm of tissue to photopolymerize the hydrogel *in vivo.* The study confirmed the selected hydrogel formulation 4% PEG-8eNB 2mM RGD DTT polymerizes under injured conditions in the presence of blood *in vivo* **(****FIGS. 10C-****10D).** The lack of intestinal crypts and epithelium structure post-injury corroborates the intestinal injury achieved in this model **(****FIGS. 10E-10F****).**
The study then tested whether this hydrogel formulation could support the HIO delivery and engraftment to the injured rat intestine tissue. Previous research demonstrated HIO fragments engrafted to injured tissue 8-10 weeks post-transplant when delivered to the isolated intestinal segment. This section of the jejunum is temporarily removed from continuity by placing a degradable suture (4.0 chromic gut suture) at the distal end of the segment surgically selected through an anastomosis **(****FIG. 11A****).** At the other end, a non-degradable suture is placed. This study asked three questions: (1) do HIO fragments survive hydrogel delivery? (2) do HIO fragments engraft after hydrogel delivery? and (3) do the rats survive the hydrogel delivery procedure? Immunodeficient RRG rats were subjected to a mucosectomy procedure where a short intestinal segment temporarily isolated from bowel continuity through anastomosis was treated with EDTA and DTT solutions, followed by physical injury using a nylon dental brush to remove the mucosal and intestinal epithelium. One group was treated with HIO fragments delivered with PEG hydrogel, and the other group was treated with HIO fragments delivered with media solution **(****FIG. 11B****).** GFP+ HIO fragments were prepared using mechanical fragmentation, as discussed previously. At 9 weeks post-surgery, the tissues were collected and subjected to histological analysis to assess the HIO engraftment. For the duration of the study, 75% of the media-treated group (n=4) and 50% of the PEG-treated group (n=8) survived the surgery, and no differences in survival were observed (p=0.8895) **(****FIG. 11C****).** HIO engraftment was calculated by measuring the total GFP+ area in the total gross intestinal tissue using a fluorescent dissection scope. Positive GFP+ area in these tissues confirm that HIOs survive and engraft to the injured tissue when delivered with PEG hydrogel **(****FIG. 11D****).** Engraftment quantification revealed one animal in the PEG group outperformed the rest of the subjects in the study; however there are no statistical differences between HIO delivered with PEG hydrogel compared when delivered with media **(****FIG. 11E****).**

The study performed immunofluorescence analysis on sectioned tissues to evaluate epithelial healing and HIO engraftment at the cellular level. HIOs are composed of both epithelial and mesenchymal cells. The tissues were stained with epithelial marker (ECAD), hindgut specific marker (CDX2), smooth muscle actin (SMA) [mesenchyme marker], proliferation marker (Ki67), and human nuclear maker (KU80) to gain an understanding of engrafted cellular phenotypes. The ECAD-positive regions demonstrated that the injured segments regained their intestinal epithelium post-injury **(****FIG. 12A****).** Quantification of KU80+ cells showed no differences between the PEG and media groups. However, there was one subject in the PEG group that outperformed the rest of the animals between groups **(****FIG. 12B****).** In both groups, CDX2+ and ECAD+ HIO-derived cells were observed; however, most cells were SMA+, suggesting the HIO engraftment comprised primarily mesenchymal cells rather than epithelial tissue **(****FIGS. 12C-12H****).** Both groups also exhibited similar proliferation levels by Ki67+ staining **(****FIG. 12F****, FIG. 12I).** Taken together, these results demonstrate that HIOs survive, engraft, and proliferate when delivered to the injured intestine using PEG hydrogel as a delivery vehicle. Whereas no differences between media and hydrogel groups were observed, delivering organoid cells with a biomaterial is an essential component in the future of tissue replacement therapy. The current media delivery method leads to HIO engraftment because the intestinal loop is temporarily disconnected from the continuity of the bowel. However, this delivery method is not clinically translatable. In humans, intestinal injuries are located throughout the continuous bowel and not in an isolated segment as in this animal model. The PEG hydrogel described here can, therefore, function as a localized cell delivery matrix in contact with the intestinal injury site.

*Hydrolytic degrading hydrogel presents no adverse events to the intestinal epithelial healing:* To evaluate the initial safety of the hydrogel formulation and any potential UV safety concerns, the study assessed the early epithelial restitution after intestinal injury with or without PEG-8eNB hydrogel using immunocompromised RRG rats **(****FIG. 13A****).** Both groups were exposed to UV light for approximately 90 s (30 sec per cm tissue) at 100% power (20mW/cm²). After 1 week, H&E tissue sections revealed no significant differences between the hydrogel and no hydrogel group, suggesting that the hydrolytically degrading hydrogel does not affect the natural healing process of the intestinal tissue **(****FIG. 13B****).**

*Hydrogel degradability promotes epithelial healing and reduces long-term inflammation.* Next, the study assessed immune responses to the hydrogel (no HIO fragments) using an immunocompetent model. The mucosectomy procedure was conducted on Sprague Dawley rats, which were then treated with hydrolytically degradable PEG hydrogel (PEG-eNB), non-degradable PEG hydrogel (PEG-aNB) or no hydrogel with UV treatment **(****FIG. 14****).** It was hypothesized that a non-degradable hydrogel (PEG-aNB) would activate high inflammation and foreign body response compared to a degradable hydrogel.

After 6 weeks post-surgery, the injured intestinal tissue was explanted to assess localized tissue immune response and epithelial healing. The study also conducted histology analysis on liver, kidney, and heart tissue and ran a serum renal and hepatic toxicity makers panel to assess the overall health and vital organ function. For all groups, early mortality within the first week post-surgery was observed, which is characteristic of this highly invasive procedure evidenced by previous experience. In this study, 50% (n=8) degradable, 44% (n=9) non-degradable, and 100% (n=4) no hydrogel of the animals survived until the end of the study **(****FIG. 15A****).** The Log-rank Mantel-Cox statistical test revealed no significant differences in survival among the groups. Sepsis or infection at the loop site is considered the leading cause of mortality among the subjects due to the mucosectomy procedure. At takedown, there was no evidence of either degradable or non-degradable hydrogel in the intestinal loop. This suggests the non-degradable hydrogel was detached from the surface and passed down with the luminal contents after the chromic gut suture degraded (~48 hr). Additionally, as the tissue healing occurs, the regenerated intestinal mucus could have promoted the detachment from the newly formed tissue. H&E staining of the injured intestinal tissue revealed similar epithelial morphology across the groups receiving degradable hydrogel, non-degradable hydrogel, and no hydrogel, indicating that the hydrogel did not interfere with the epithelial repair process **(****FIG. 15B****).**

The study measured the intestinal villi length and width to quantitatively compare epithelial healing and morphological differences among groups [210]. No significant changes were observed among the degradable, non-degradable, and no hydrogel injured tissues (FIG. **15C****).** However, when the injured tissue segment was compared to the uninjured control tissue per animal, the study saw higher villi height width ratio in the control tissue for the no hydrogel group **(FIG. 15D).** Further studies are needed to fully access what could have caused these differences in the no hydrogel group. The study observed a high nuclei density area for one animal in the non-degradable group, suggesting that hydrogel degradability is an important attribute to avoid deleterious inflammatory response that might impair tissue healing **(****FIG. 15B****,** middle panel). The hepatic and renal serum enzymes (AST, ALP, ALKP) and total protein levels were similar across the experimental groups and within the normal range **(****FIGS. 16A-****16D).** No significant differences were found in the histological analysis of the heart, kidney, and liver sections **(****FIG. 16E****).** These results indicate that the hydrogel does not elicit adverse local or systemic effects and indicate an acceptable safety profile.

### Discussion

The main objective of this study was to design a hydrogel capable of delivering HIOs to the injured intestinal segment to promote organoid engraftment and tissue healing. This study developed two different delivery approaches using a photopolymerizable hydrogel formulation (PEG-8NB) including introducing a thin UV lightguide through the intestinal lumen or exposing the UV light outside the intestinal loop through the tissue. The study selected the external polymerization method for the experiments listed here due to experimental constraints, but it is anticipated that the internal polymerization method may be better suited for translating this technology to larger animal models or clinical studies. The exposure time and UV power selected *in vitro* were key parameters to polymerize the hydrogel through the tissue *in vivo* under injured conditions. The hydrogel macromer (PEG-e8NB) contained an ester linkage formulation, which rapidly degraded *in vivo* within the time constraints of the animal model. The study designed the hydrogel degradation to occur within the first 48-72 hr following the same degradation profile of the chromic gut suture. This suture limits the continuity and flow of luminal contents to the injured intestinal loop; the study engineered the hydrogel to serve as a cell-releasing matrix prior to the reconnection with the rest of the intestinal flow. HIO delivery using this hydrogel formulation resulted in successful HIO engraftment to the intestinal wall. Histological analysis revealed that the engrafted HIO cells were the primary smooth muscle actin compared to intestinal epithelial cells (ECAD+, CDX2+). These results suggest that HIO-derived mesenchymal cells constitute the majority of the engrafted cells. While it was originally hypothesized that HIO epithelial cells would predominantly target the intestinal lining healing, healthy incorporation of mesenchymal tissue could serve as a base for epithelial healing [49], [154]. Additionally, early re-epithelization studies suggested that neither the hydrogel nor the UV exposure impaired the epithelial healing process at 7 days post-delivery, evidenced by histological analysis. Finally, the study explored the gross immune response to the engineered hydrogel independent of the HIOs to assess any safety concerns with using this material.

The study included the non-degradable hydrogel formulation to understand any localized or systematic responses to a hydrogel over a longer timeframe. Results showed there are no major changes in epithelial healing and villus height and width ratio among groups. One animal in the non-degradable group presented signs of high nuclear infiltration, suggesting a localized immune response. Future studies will characterize the immune cell composition through immunofluorescence or histological analysis. Interestingly, at the 6 week time point, there was no evidence of the non-degradable hydrogel in the injured loop. Hydrogel adhesion to the tissue could have been disrupted after chromic suture degradation, or there was initial poor adhesion to the tissue. Pilot studies performed using the internal polymerization method revealed the formed thin hydrogel coating remains adhered to the tissue after PBS perfusion through the segment. The adhesion appeared to be stronger after injury (mucus removal), evidenced by the higher presence of fluorescent microbeads embedded into the hydrogel matrix. Due to the rapid hydrogel degradation and the hydrogel retention inside the intestinal loop with the help of the chromic gut suture, the hydrogel adhesion using the external method was not investigated. Future studies should consider evaluating tissue adhesion when transitioning to a different animal model. Overall, these studies suggest that the hydrogel is a safe biomaterial and effective for the delivery and engraftment of HIOs. While there are no differences in HIO engraftment was observed if cells were delivered with PEG or media, using PEG hydrogel is an immediate advantage to using media for the clinical translation of HIO replacement therapy. Securing the cells to the injured intestinal wall is not possible without the use of a biomaterial.

This study presents a hydrogel formulation, 4% PEG-8eNB functionalized with 2mM RGD and crosslinked with DTT, capable of sustaining HIO viability and engraftment when delivered to injured rat intestine. The hydrogel serves as a cell-releasing matrix, promoting tissue healing and regeneration post-injury. This engineered biomaterial is proven to be safe to the animal and degrades within a specified time frame.

### EXAMPLE ASPECTS

**Example 1:** A hydrogel formable to deliver a cargo to a tubular epithelial structure, the hydrogel formed by: a) preparing a hydrogel precursor comprising the cargo; b) applying the hydrogel precursor to the tubular epithelial structure through a lumen of said tubular epithelial structure; and c) curing the hydrogel precursor, thereby forming a hydrogel comprising the cargo; wherein the hydrogel degrades over time, thereby releasing the cargo to the tubular epithelial structure.

**Example 2:** The hydrogel of any examples herein, particularly Example 1, wherein the hydrogel precursor comprises a hydrolyzable macromer.

**Example 3:** The hydrogel of any examples herein, particularly Example 2, wherein the hydrogel precursor comprises a poly(ethylene glycol) (PEG) macromer.

**Example 4:** The hydrogel of any examples herein, particularly Example 3, wherein the hydrogel precursor comprises a 4 arm norbornene-terminated poly(ethylene glycol) (PEG-4NB) macromer, an 8 arm norbornene-terminated poly(ethylene glycol) with ester linkage (PEG-8eNB) macromer, an 8 arm norbornene-terminated poly(ethylene glycol) with amide linkage (PEG-8aNM) macromer, or any combination thereof.

**Example 5:** The hydrogel of any examples herein, particularly Examples 1-4, wherein the hydrogel precursor comprises a degradable crosslinker.

**Example 6:** The hydrogel of any examples herein, particularly Example 5, wherein the crosslinker comprises a protease-degradable peptide having one or more sequences comprising GPQW, VPM, and/or IPES.

**Example 7:** The hydrogel of any examples herein, particularly Examples 1-6, wherein the cargo comprises a small molecule, a therapeutic agent, a peptide, a nucleic acid, a cell, or any combination thereof.

**Example 8:** The hydrogel of any examples herein, particularly Example 7, wherein the cargo comprises stem cells.

**Example 9:** The hydrogel of any examples herein, particularly Examples 7-8, wherein the cargo comprises one or more anti-inflammatory agents.

**Example 10:** The hydrogel of any examples herein, particularly Examples 7-9, wherein the cargo comprises organoids or fragments thereof.

**Example 11:** The hydrogel of any examples herein, particularly Example 10, wherein the cargo comprises human intestinal organoids or fragments thereof.

**Example 12:** The hydrogel of any examples herein, particularly Examples 1-11, wherein step b) comprises injecting the hydrogel precursor into the lumen, thereby at least partially filling the lumen with the hydrogel.

**Example 13:** The hydrogel of any examples herein, particularly Examples 1-11, wherein step b) comprises spraying the hydrogel precursor onto an internal surface of the tubular epithelial structure through the lumen.

**Example 14:** The hydrogel of any examples herein, particularly Examples 1-13, wherein step c) comprises exposing the hydrogel precursor to light.

**Example 15:** The hydrogel of any examples herein, particularly Example 14, wherein step c) comprises exposing the hydrogel precursor to UV light.

**Example 16:** The hydrogel of any examples herein, particularly Examples 1-15, wherein the hydrogel is formed as a hydrogel body.

**Example 17:** The hydrogel of any examples herein, particularly Examples 1-15, wherein the hydrogel is formed as a hydrogel coating on an internal surface of the tubular epithelial structure.

**Example 18:** The hydrogel of any examples herein, particularly Examples 1-17, wherein about 90% or more of the hydrogel degrades after from about 12 hours to about 96 hours after step c) is conducted.

**Example 19:** A method of delivering a cargo to a tubular epithelial structure, the method comprising: a) preparing a hydrogel precursor comprising the cargo; b) applying the hydrogel precursor to the tubular epithelial structure through a lumen of said tubular epithelial structure; and c) curing the hydrogel precursor, thereby forming a hydrogel comprising the cargo; wherein the hydrogel degrades over time, thereby releasing the cargo to the tubular epithelial structure.

**Example 20:** The method of any examples herein, particularly Example 19, wherein the tubular epithelial structure is a small intestine, a large intestine, an esophagus, a stomach, a colon, an artery, a vein, a renal tubule, a ureter, a urinary bladder, a urethra, a fallopian tube, a pancreatic duct, a bile duct, or a uterus.

**Example 21:** The method of any examples herein, particularly Examples 19-20, wherein the tubular epithelial structure is injured and/or diseased.

**Example 22:** The method of any examples herein, particularly Examples 19-21, wherein the hydrogel precursor comprises a hydrolyzable macromer.

**Example 23:** The method of any examples herein, particularly Examples 19-22, wherein the hydrogel precursor comprises a poly(ethylene glycol) (PEG) macromer.

**Example 24:** The method of any examples herein, particularly Example 23, wherein the hydrogel precursor comprises a 4 arm norbornene-terminated poly(ethylene glycol) (PEG-4NB) macromer, an 8 arm norbornene-terminated poly(ethylene glycol) with ester linkage (PEG-8eNB) macromer, an 8 arm norbornene-terminated poly(ethylene glycol) with amide linkage (PEG-8aNM) macromer, or any combination thereof.

**Example 25:** The method of any examples herein, particularly Examples 19-24, wherein the hydrogel precursor comprises a degradable crosslinker.

**Example 26:** The method of any examples herein, particularly Example 25, wherein the crosslinker comprises a protease-degradable peptide having one or more sequences comprising GPQW, VPM, and/or IPES.

**Example 27:** The method of any examples herein, particularly Examples 19-26, wherein the cargo comprises a small molecule, a therapeutic agent, a peptide, a nucleic acid, a cell, or any combination thereof.

**Example 28:** The method of any examples herein, particularly Example 27, wherein the cargo comprises stem cells.

**Example 29:** The method of any examples herein, particularly Examples 27-28, wherein the cargo comprises one or more anti-inflammatory agents.

**Example 30:** The method of any examples herein, particularly Examples 27-29, wherein the cargo comprises organoids or fragments thereof.

**Example 31:** The method of any examples herein, particularly Example 30, wherein the cargo comprises human intestinal organoids or fragments thereof.

**Example 32:** The method of any examples herein, particularly Examples 19-31, wherein step b) comprises injecting the hydrogel precursor into the lumen, thereby at least partially filling the lumen with the hydrogel.

**Example 33:** The method of any examples herein, particularly Examples 19-31, wherein step b) comprises spraying the hydrogel precursor onto an internal surface of the tubular epithelial structure through the lumen.

**Example 34:** The method of any examples herein, particularly Examples 19-33, wherein step c) comprises exposing the hydrogel precursor to light.

**Example 35:** The method of any examples herein, particularly Example 34, wherein step c) comprises exposing the hydrogel precursor to UV light.

**Example 36:** The method of any examples herein, particularly Examples 34-35, wherein step c) comprises exposing the hydrogel precursor to light using a light source external to the tubular epithelial structure.

**Example 37:** The method of any examples herein, particularly Examples 34-35, wherein step c) comprises exposing the hydrogel precursor to light using a light source deposited within the lumen.

**Example 38:** A method of treating and/or preventing tissue damage in a subject, the method comprising conducting the method of any examples herein, particularly Examples 19-37 within a tubular epithelial structure of the subject.

**Example 39:** The method of any examples herein, particularly Example 38, wherein the subject has inflammatory bowel disease, Crohn's disease, and/or ulcerative colitis.

**Example 40:** The method of any examples herein, particularly Examples 38-40, wherein the subject has or has been treated for cancer (e.g., colorectal cancer, esophageal cancer, stomach cancer, intestinal cancer).

The following patents, applications, and publications, as listed below and throughout this document, are hereby incorporated by reference in their entirety herein.

### Reference List

[1] Gunther, C. et al. Organoids in gastrointestinal diseases: from experimental models to clinical translation. Gut 71, 1892-1908, doi:10.1136/gutjnl-2021-326560 (2022).
[2] Taelman, J. et al. Human Intestinal Organoids: Promise and Challenge. Front Cell Dev Biol 10, 854740, doi:10.3389/fcell.2022.854740 (2022).
[3] Spence, J. R. Taming the Wild West of Organoids, Enteroids, and Mini-Guts. Cell Mol Gastroenterol Hepatol 5, 159-160, doi:10.1016/j.jcmgh.2017.11.003 (2018).
[4] Hautefort, I. et al. Everything You Always Wanted to Know About Organoid-Based Models (and Never Dared to Ask). Cell Mol Gastroenterol Hepatol 14, 311-331, doi:10.1016/j.jcmgh.2022.04.012 (2022).
[5] Yui, S. et al. Functional engraftment of colon epithelium expanded in vitro from a single adult Lgr5(+) stem cell. Nat Med 18, 618-623, doi:10.1038/nm.2695 (2012).
[6] Kitano, K. et al. Bioengineering of functional human induced pluripotent stem cell-derived intestinal grafts. Nat Commun 8, 765, doi:10.1038/s41467-017-00779-y (2017).
[7] Meran, L. et al. Engineering transplantable jejunal mucosal grafts using patient-derived organoids from children with intestinal failure. Nat Med 26, 1593-1601, doi:10.1038/s41591-020-1024-z (2020).
[8] Cruz-Acuna, R. et al. Synthetic hydrogels for human intestinal organoid generation and colonic wound repair. Nat Cell Biol 19, 1326-1335, doi:10.1038/ncb3632 (2017).
[9] Ganesh, K. et al. A rectal cancer organoid platform to study individual responses to chemoradiation. Nat Med 25, 1607-1614, doi:10.1038/s41591-019-0584-2 (2019).
[10] Takahashi, Y. et al. Drug cytotoxicity screening using human intestinal organoids propagated with extensive cost-reduction strategies. Sci Rep 13, 5407, doi:10.1038/s41598-023-32438-2 (2023).
[11] Yoshida, S. et al. Generation of intestinal organoids derived from human pluripotent stem cells for drug testing. Sci Rep 10, 5989, doi:10.1038/s41598-020-63151-z (2020).
[12] Spence, J. R. et al. Directed differentiation of human pluripotent stem cells into intestinal tissue in vitro. Nature 470, 105-109, doi:10.1038/nature09691 (2011).
[13] Sprangers, J. et al. Organoid-based modeling of intestinal development, regeneration, and repair. Cell Death Differ 28, 95-107, doi:10.1038/s41418-020-00665-z (2021).
[14] Clevers, H. Modeling Development and Disease with Organoids. Cell 165, 1586-1597, doi:10.1016/j.cell.2016.05.082 (2016).
[15] Zhou, J. et al. Infection of bat and human intestinal organoids by SARS-CoV-2. Nat Med 26, 1077-1083, doi:10.1038/s41591-020-0912-6 (2020).
[16] Lau, H. C. H. et al. Organoid models of gastrointestinal cancers in basic and translational research. Nat Rev Gastroenterol Hepatol 17, 203-222, doi:10.1038/s41575-019-0255-2 (2020).
[17] Sato, T. et al. Single Lgr5 stem cells build crypt-villus structures in vitro without a mesenchymal niche. Nature 459, 262-265, doi:10.1038/nature07935 (2009).
[18] Hughes, C. S. et al. Matrigel: a complex protein mixture required for optimal growth of cell culture. Proteomics 10, 1886-1890, doi:10.1002/pmic.200900758 (2010).
[19] Slater, K. et al. Tuning the Elastic Moduli of Corning™ Matrigel™ and Collagen I 3D Matrices by Varying the Protein Concentration: Application Note. (2018).
[20] Aisenbrey, E. A. & Murphy, W. L. Synthetic alternatives to Matrigel. Nat Rev Mater 5, 539-551, doi:10.1038/s41578-020-0199-8 (2020).
[21] Kozlowski, M. T. et al. Towards organoid culture without Matrigel. Commun Biol 4, 1387, doi:10.1038/s42003-021-02910-8 (2021).
[22] Kratochvil, M. J. et al. Engineered materials for organoid systems. Nat Rev Mater 4, 606-622, doi:10.1038/s41578-019-0129-9 (2019).
[23] Al Abbar, A. et al. Induced Pluripotent Stem Cells: Reprogramming Platforms and Applications in Cell Replacement Therapy. Biores Open Access 9, 121-136, doi:10.1089/biores.2019.0046 (2020).
[24] McCracken, K. W. et al. Generating human intestinal tissue from pluripotent stem cells in vitro. Nat Protoc 6, 1920-1928, doi:10.1038/nprot.2011.410 (2011).
[25] Takahashi, Y. et al. A Refined Culture System for Human Induced Pluripotent Stem Cell-Derived Intestinal Epithelial Organoids. Stem Cell Reports 10, 314-328, doi:10.1016/j.stemcr.2017.11.004 (2018).
[26] Tamminen, K. et al. Intestinal Commitment and Maturation of Human Pluripotent Stem Cells Is Independent of Exogenous FGF4 and R-spondin1. PLoS One 10, e0134551, doi:10.1371/journal.pone.0134551 (2015).
[27] Ogawa, I. et al. Suspension culture of human induced pluripotent stem cell-derived intestinal organoids using natural polysaccharides. Biomaterials 288, 121696, doi:10.1016/j.biomaterials.2022.121696 (2022).
[28] Capeling, M. et al. Generation of small intestinal organoids for experimental intestinal physiology. Methods Cell Biol 159, 143-174, doi:10.1016/bs.mcb.2020.03.007 (2020).
[29] Wells, J. M. & Spence, J. R. How to make an intestine. Development 141, 752-760, doi:10.1242/dev.097386 (2014).
[30] Watson, C. L. et al. An in vivo model of human small intestine using pluripotent stem cells. Nat Med 20, 1310-1314, doi:10.1038/nm.3737 (2014).
[31] Finkbeiner, S. R. et al. Transcriptome-wide Analysis Reveals Hallmarks of Human Intestine Development and Maturation In vitro and In vivo. Stem Cell Reports 4, 1140-1155, doi:10.1016/j.stemcr.2015.04.010 (2015).
[32] Singh, A. et al. Transplanted human intestinal organoids: a resource for modeling human intestinal development. Development 150, doi:10.1242/dev.201416 (2023).
[33] Yu, Q. et al. Charting human development using a multi-endodermal organ atlas and organoid models. Cell 184, 3281-3298 e3222, doi:10.1016/j.cell.2021.04.028 (2021).
[34] Poling, H. M. et al. Mechanically induced development and maturation of human intestinal organoids in vivo. Nat Biomed Eng 2, 429-442, doi:10.1038/s41551-018-0243-9 (2018).
[35] Kilik, U. et al. Maturation of human intestinal epithelium from pluripotency in vitro. bioRxiv, 2021.2009.2024.460132, doi:10.1101/2021.09.24.460132 (2021).
[36] Holloway, E. M. et al. Differentiation of Human Intestinal Organoids with Endogenous Vascular Endothelial Cells. Dev Cell 54, 516-528 e517, doi:10.1016/j.devcel.2020.07.023 (2020).
[37] Workman, M. J. et al. Engineered human pluripotent-stem-cell-derived intestinal tissues with a functional enteric nervous system. Nat Med 23, 49-59, doi:10.1038/nm.4233 (2017).
[38] Holloway, E. M. et al. Biologically inspired approaches to enhance human organoid complexity. Development 146, doi:10.1242/dev.166173 (2019).
[39] Hill, D. R. et al. Bacterial colonization stimulates a complex physiological response in the immature human intestinal epithelium. Elife 6, doi:10.7554/eLife.29132 (2017).
[40] Bouffi, C. et al. In vivo development of immune tissue in human intestinal organoids transplanted into humanized mice. Nat Biotechnol 41, 824-831, doi:10.1038/s41587-022-01558-x (2023).
[41] Perrone, F. & Zilbauer, M. Biobanking of human gut organoids for translational research. Exp Mol Med 53, 1451-1458, doi:10.1038/s12276-021-00606-x (2021).
[42] Urbano, P. C. M. et al. Assessment of source material for human intestinal organoid culture for research and clinical use. BMC Res Notes 15, 35, doi:10.1186/s13104-022-05925-4 (2022).
[43] Lewis, S. K. et al. DNA Methylation Analysis Validates Organoids as a Viable Model for Studying Human Intestinal Aging. Cell Mol Gastroenterol Hepatol 9, 527-541, doi:10.1016/j.jcmgh.2019.11.013 (2020).
[44] Beanland, B. T. et al. Investigation of murine host sex as a biological variable in epithelial barrier function and muscle contractility in human intestinal organoids. FASEB J 36, e22613, doi:10.1096/fj.202101740RR (2022).
[45] Yan, H. H. N. et al. A Comprehensive Human Gastric Cancer Organoid Biobank Captures Tumor Subtype Heterogeneity and Enables Therapeutic Screening. Cell Stem Cell 23, 882-897 e811, doi:10.1016/j.stem.2018.09.016 (2018).
[46] Sato, T. et al. Long-term expansion of epithelial organoids from human colon, adenoma, adenocarcinoma, and Barrett's epithelium. Gastroenterology 141, 1762-1772, doi:10.1053/j.gastro.2011.07.050 (2011).
[47] Pleguezuelos-Manzano, C. et al. Establishment and Culture of Human Intestinal Organoids Derived from Adult Stem Cells. Curr Protoc Immunol 130, e106, doi:10.1002/cpim.106 (2020).
[48] Fujii, M. et al. Human Intestinal Organoids Maintain Self-Renewal Capacity and Cellular Diversity in Niche-Inspired Culture Condition. Cell Stem Cell 23, 787-793 e786, doi:10.1016/j.stem.2018.11.016 (2018).
[49] Kasendra, M. et al. Intestinal organoids: roadmap to the clinic. Am J Physiol Gastrointest Liver Physiol 321, G1-G10, doi:10.1152/ajpgi.00425.2020 (2021).
[50] Hynes, R. O. The extracellular matrix: not just pretty fibrils. Science 326, 1216-1219, doi:10.1126/science.1176009 (2009).
[51] Vining, K. H. & Mooney, D. J. Mechanical forces direct stem cell behaviour in development and regeneration. Nat Rev Mol Cell Biol 18, 728-742, doi:10.1038/nrm.2017.108 (2017).
[52] Streuli, C. H. Integrins and cell-fate determination. J Cell Sci 122, 171-177, doi:10.1242/jcs.018945 (2009).
[53] Garcia, A. J. & Boettiger, D. Integrin-fibronectin interactions at the cell-material interface: initial integrin binding and signaling. Biomaterials 20, 2427-2433, doi:10.1016/s0142-9612(99)00170-2 (1999).
[54] Diller, R. B. & Tabor, A. J. The Role of the Extracellular Matrix (ECM) in Wound Healing: A Review. Biomimetics (Basel) 7, doi:10.3390/biomimetics7030087 (2022).
[55] Bonnans, C. et al. Remodelling the extracellular matrix in development and disease. Nat Rev Mol Cell Biol 15, 786-801, doi:10.1038/nrm3904 (2014).
[56] Lu, P. et al. Extracellular matrix degradation and remodeling in development and disease. Cold Spring Harb Perspect Biol 3, doi:10.1101/cshperspect.a005058 (2011).
[57] Li, A. C. & Thompson, R. P. Basement membrane components. J Clin Pathol 56, 885-887, doi:10.1136/jcp.56.12.885 (2003).
[58] Meran, L. et al. Intestinal Stem Cell Niche: The Extracellular Matrix and Cellular Components. Stem Cells Int 2017, 7970385, doi:10.1155/2017/7970385 (2017).
[59] Rezakhani, S. et al. Extracellular matrix requirements for gastrointestinal organoid cultures. Biomaterials 276, 121020, doi:10.1016/j.biomaterials.2021.121020 (2021).
[60] Deng, F. et al. The Hippo-YAP/TAZ Signaling Pathway in Intestinal Self-Renewal and Regeneration After Injury. Front Cell Dev Biol 10, 894737, doi:10.3389/fcell.2022.894737 (2022).
[61] Yui, S. et al. YAP/TAZ-Dependent Reprogramming of Colonic Epithelium Links ECM Remodeling to Tissue Regeneration. Cell Stem Cell 22, 35-49 e37, doi:10.1016/j.stem.2017.11.001 (2018).
[62] Gjorevski, N. et al. Designer matrices for intestinal stem cell and organoid culture. Nature 539, 560-564, doi:10.1038/nature20168 (2016).
[63] Perez-Gonzalez, C. et al. Digesting the mechanobiology of the intestinal epithelium. Curr Opin Genet Dev 72, 82-90, doi:10.1016/j.gde.2021.10.005 (2022).
[64] Ahmed, E. M. Hydrogel: Preparation, characterization, and applications: A review. J Adv Res 6, 105-121, doi:10.1016/j.jare.2013.07.006 (2015).
[65] Caliari, S. R. & Burdick, J. A. A practical guide to hydrogels for cell culture. Nat Methods 13, 405-414, doi:10.1038/nmeth.3839 (2016).
[66] Sivaraj, D. et al. Hydrogel Scaffolds to Deliver Cell Therapies for Wound Healing. Front Bioeng Biotechnol 9, 660145, doi:10.3389/fbioe.2021.660145 (2021).
[67] Cruz-Acuna, R. et al. Identification of matrix physicochemical properties required for renal epithelial cell tubulogenesis by using synthetic hydrogels. J Cell Sci 132, doi:10.1242/jcs.226639 (2019).
[68] Guvendiren, M. & Burdick, J. A. Engineering synthetic hydrogel microenvironments to instruct stem cells. Curr Opin Biotechnol 24, 841-846, doi:10.1016/j.copbio.2013.03.009 (2013).
[69] Lutolf, M. P. et al. Synthetic matrix metalloproteinase-sensitive hydrogels for the conduction of tissue regeneration: engineering cell-invasion characteristics. Proc Natl Acad Sci U S A 100, 5413-5418, doi:10.1073/pnas.0737381100 (2003).
[70] Raeber, G. P. et al. Molecularly engineered PEG hydrogels: a novel model system for proteolytically mediated cell migration. Biophys J 89, 1374-1388, doi:10.1529/biophysj.104.050682 (2005).
[71] Musah, S. et al. Glycosaminoglycan-binding hydrogels enable mechanical control of human pluripotent stem cell self-renewal. ACS Nano 6, 10168-10177, doi:10.10211/nn3039148 (2012).
[72] Yang, B. et al. Enhanced mechanosensing of cells in synthetic 3D matrix with controlled biophysical dynamics. Nat Commun 12, 3514, doi:10.1038/s41467-021-23120-0 (2021).
[73] Zhu, J. Bioactive modification of poly(ethylene glycol) hydrogels for tissue engineering. Biomaterials 31, 4639-4656, doi:10.1016/j.biomaterials.2010.02.044 (2010).
[74] Bashir, S. et al. Fundamental Concepts of Hydrogels: Synthesis, Properties, and Their Applications. Polymers (Basel) 12, doi:10.3390/polym12112702 (2020).
[75] Lee, K. Y. & Mooney, D. J. Hydrogels for tissue engineering. Chem Rev 101, 1869-1879, doi:10.1021/cr000108x (2001).
[76] Cruz-Acuna, R. & Garcia, A. J. Engineered materials to model human intestinal development and cancer using organoids. Exp Cell Res 377, 109-114, doi:10.1016/j.yexcr.2019.02.017 (2019).
[77] Unal, A. Z. & West, J. L. Synthetic ECM: Bioactive Synthetic Hydrogels for 3D Tissue Engineering. Bioconjug Chem 31, 2253-2271, doi:10.1021/acs.bioconjchem.0c00270 (2020).
[78] Azagarsamy, M. A. & Anseth, K. S. Bioorthogonal Click Chemistry: An Indispensable Tool to Create Multifaceted Cell Culture Scaffolds. ACS Macro Lett 2, 5-9, doi:10.1021/mz300585q (2013).
[79] Phelps, E. A. et al. Maleimide cross-linked bioactive PEG hydrogel exhibits improved reaction kinetics and cross-linking for cell encapsulation and in situ delivery. Adv Mater 24, 64-70, 62, doi:10.1002/adma.201103574 (2012).
[80] Hermanson, G. T. in Bioconjugate Techniques (Third Edition) (ed Greg T. Hermanson) 229-258 (Academic Press, 2013).
[81] Vats, K. et al. Nanoscale physicochemical properties of chain- and step-growth polymerized PEG hydrogels affect cell-material interactions. J Biomed Mater Res A 105, 1112-1122, doi:10.1002/jbm.a.36007 (2017).
[82] Fairbanks, B. D. et al. A Versatile Synthetic Extracellular Matrix Mimic via Thiol-Norbornene Photopolymerization. Adv Mater 21, 5005-5010, doi:10.1002/adma.200901808 (2009).
[83] Lin, C. C. et al. Thiol-norbornene photo-click hydrogels for tissue engineering applications. J Appl Polym Sci 132, doi:10.1002/app.41563 (2015).
[84] Baskin, J. M. et al. Copper-free click chemistry for dynamic in vivo imaging. Proc Natl Acad Sci USA 104, 16793-16797, doi:10.1073/pnas.0707090104 (2007).
[85] Hushka, E. A. et al. Relaxation of Extracellular Matrix Forces Directs Crypt Formation and Architecture in Intestinal Organoids. Adv Healthc Mater 9, e1901214, doi:10.1002/adhm.201901214 (2020).
[86] Agard, N. J. et al. A strain-promoted [3 + 2] azidealkyne cycloaddition for covalent modification of biomolecules in living systems. J Am Chem Soc 126, 15046-15047, doi:10.10211ja044996f (2004).
[87] McKinnon, D. D. et al. Design and characterization of a synthetically accessible, photodegradable hydrogel for user-directed formation of neural networks. Biomacromolecules 15, 2808-2816, doi:10.1021/bm500731b (2014).
[88] Brown, T. E. & Anseth, K. S. Spatiotemporal hydrogel biomaterials for regenerative medicine. Chem Soc Rev 46, 6532-6552, doi:10.1039/c7cs00445a (2017).
[89] Kim, J. et al. Characterization of the crosslinking kinetics of multi-arm poly(ethylene glycol) hydrogels formed via Michael-type addition. Soft Matter 12, 2076-2085, doi:10.1039/c5sm02668g (2016).
[90] Macdougall, L. J. et al. Intracellular Crowding by Bio-Orthogonal Hydrogel Formation Induces Reversible Molecular Stasis. Adv Mater 34, e2202882, doi:10.1002/adma.202202882 (2022).
[91] Zuidema, J. M. et al. A protocol for rheological characterization of hydrogels for tissue engineering strategies. J Biomed Mater Res B Appl Biomater 102, 1063-1073, doi:10.1002/jbm.b.33088 (2014).
[92] Drira, Z. & Yadavalli, V. K. Nanomechanical measurements of polyethylene glycol hydrogels using atomic force microscopy. J Mech Behav Biomed Mater 18, 20-28, doi:10.1016/j.jmbbm.2012.09.015 (2013).
[93] Pokki, J. et al. Magnetic probe-based microrheology reveals local softening and stiffening of 3D collagen matrices by fibroblasts. Biomed Microdevices 23, 27, doi:10.1007/s10544-021-00547-2 (2021).
[94] Yavitt, F. M. et al. In situ modulation of intestinal organoid epithelial curvature through photoinduced viscoelasticity directs crypt morphogenesis. Sci Adv 9, eadd5668, doi:10.1126/sciadv.add5668 (2023).
[95] Peppas, N. A. et al. Physicochemical foundations and structural design of hydrogels in medicine and biology. Annu Rev Biomed Eng 2, 9-29, doi:10.1146/annurev.bioeng.2.1.9 (2000).
[96] Oyen, M. L. Mechanical characterisation of hydrogel materials. International Materials Reviews 59, 44-59, doi:10.1179/1743280413Y.0000000022 (2014).
[97] Han, W. M. et al. Synthetic matrix enhances transplanted satellite cell engraftment in dystrophic and aged skeletal muscle with comorbid trauma. Sci Adv 4, eaar4008, doi:10.1126/sciadv.aar4008 (2018).
[98] Anseth, K. S. et al. Mechanical properties of hydrogels and their experimental determination. Biomaterials 17, 1647-1657, doi:10.1016/0142-9612(96)87644-7 (1996).
[99] Chaudhuri, O. et al. Effects of extracellular matrix viscoelasticity on cellular behaviour. Nature 584, 535-546, doi:10.1038/s41586-020-2612-2 (2020).
[100] Chaudhuri, O. Viscoelastic hydrogels for 3D cell culture. Biomater Sci 5, 1480-1490, doi:10.1039/c7bm00261k (2017).
[101] Cacopardo, L. et al. Engineering hydrogel viscoelasticity. J Mech Behav Biomed Mater 89, 162-167, doi:10.1016/j.jmbbm.2018.09.031 (2019).
[102] Sternlicht, M. D. & Werb, Z. How matrix metalloproteinases regulate cell behavior. Annu Rev Cell Dev Biol 17, 463-516, doi:10.1146/annurev.cellbio.17.1.463 (2001).
[103] Lopez-Otin, C. & Bond, J. S. Proteases: multifunctional enzymes in life and disease. J Biol Chem 283, 30433-30437, doi:10.1074/jbc.R800035200 (2008).
[104] Yan, F. et al. Synthesis and characterization of a photocleavable cross-linker and its application on tunable surface modification and protein photodelivery. Bioconjug Chem 15, 1030-1036, doi:10.1021/bc049901d (2004).
[105] Brown, T. E. et al. Amplified Photodegradation of Cell-Laden Hydrogels via an Addition-Fragmentation Chain Transfer Reaction. Adv Mater 29, doi:10.1002/adma.201605001 (2017).
[106] Zustiak, S. P. & Leach, J. B. Hydrolytically degradable poly(ethylene glycol) hydrogel scaffolds with tunable degradation and mechanical properties. Biomacromolecules 11, 1348-1357, doi:10.1021/bm100137q (2010).
[107] Hunckler, M. D. et al. Linkage Groups within Thiol-Ene Photoclickable PEG Hydrogels Control In vivo Stability. Adv Healthc Mater 8, e1900371, doi:10.1002/adhm.201900371 (2019).
[108] Madl, C. M. et al. Tuning Bulk Hydrogel Degradation by Simultaneous Control of Proteolytic Cleavage Kinetics and Hydrogel Network Architecture. ACS Macro Lett 7, 1302-1307, doi:10.1021/acsmacrolett.8b00664 (2018).
[109] Martin, K. E. et al. Hydrolytic hydrogels tune mesenchymal stem cell persistence and immunomodulation for enhanced diabetic cutaneous wound healing. Biomaterials 301, 122256, doi:10.1016/j.biomaterials.2023.122256 (2023).
[110] Enemchukwu, N. O. et al. Synthetic matrices reveal contributions of ECM biophysical and biochemical properties to epithelial morphogenesis. J Cell Biol 212, 113-124, doi:10.1083/jcb.201506055 (2016).
[111] Hernandez-Gordillo, V. et al. Fully synthetic matrices for in vitro culture of primary human intestinal enteroids and endometrial organoids. Biomaterials 254, 120125, doi:10.1016/j.biomaterials.2020.120125 (2020).
[112] Phelps, E. A. et al. Engineered VEGF-releasing PEG-MAL hydrogel for pancreatic islet vascularization. Drug Deliv Transl Res 5, 125-136, doi:10.1007/s13346-013-0142-2 (2015).
[113] Han, W. M. et al. Codelivery of Wnt7a and muscle stem cells using synthetic bioadhesive hydrogel enhances murine muscle regeneration and cell migration during engraftment. Acta Biomater 94, 243-252, doi:10.1016/j.actbio.2019.06.025 (2019).
[114] Cambria, E. et al. Covalent Modification of Synthetic Hydrogels with Bioactive Proteins via Sortase-Mediated Ligation. Biomacromolecules 16, 2316-2326, doi:10.1021/acs.biomac.5b00549 (2015).
[115] Kloxin, A. M. et al. Mechanical properties of cellularly responsive hydrogels and their experimental determination. Adv Mater 22, 3484-3494, doi:10.1002/adma.200904179 (2010).
[116] Hersel, U. et al. RGD modified polymers: biomaterials for stimulated cell adhesion and beyond. Biomaterials 24, 4385-4415, doi:10.1016/s0142-9612(03)00343-0 (2003).
[117] Huettner, N. et al. Discovering Cell-Adhesion Peptides in Tissue Engineering: Beyond RGD. Trends Biotechnol 36, 372-383, doi:10.1016/j.tibtech.2018.01.008 (2018).
[118] Bellis, S. L. Advantages of RGD peptides for directing cell association with biomaterials. Biomaterials 32, 4205-4210, doi:10.1016/j.biomaterials.2011.02.029 (2011).
[119] Maitre, J. L. & Heisenberg, C. P. Three functions of cadherins in cell adhesion. Curr Biol 23, R626-633, doi:10.1016/j.cub.2013.06.019 (2013).
[120] Bian, L. et al. Hydrogels that mimic developmentally relevant matrix and N-cadherin interactions enhance MSC chondrogenesis. Proc Natl Acad Sci U S A 110, 10117-10122, doi:10.1073/pnas.1214100110 (2013).
[121] Zhang, Z. et al. Programmable integrin and N-cadherin adhesive interactions modulate mechanosensing of mesenchymal stem cells by cofilin phosphorylation. Nat Commun 13, 6854, doi:10.1038/s41467-022-34424-0 (2022).
[122] Seliktar, D. et al. MMP-2 sensitive, VEGF-bearing bioactive hydrogels for promotion of vascular healing. J Biomed Mater Res A 68, 704-716, doi:10.1002/jbm.a.20091 (2004).
[123] Saik, J. E. et al. Covalently immobilized platelet-derived growth factor-BB promotes angiogenesis in biomimetic poly(ethylene glycol) hydrogels. Acta Biomater 7, 133-143, doi:10.1016/j.actbio.2010.08.018 (2011).
[124] Martino, M. M. et al. Heparin-binding domain of fibrin(ogen) binds growth factors and promotes tissue repair when incorporated within a synthetic matrix. Proc Natl Acad Sci U S A 110, 4563-4568, doi:10.1073/pnas.1221602110 (2013).
[125] Abune, L. et al. Macroporous Hydrogels for Stable Sequestration and Sustained Release of Vascular Endothelial Growth Factor and Basic Fibroblast Growth Factor Using Nucleic Acid Aptamers. ACS Biomater Sci Eng 5, 2382-2390, doi:10.1021/acsbiomaterials.9b00423 (2019).
[126] Rezakhani, S. et al. Low-Defect Thiol-Michael Addition Hydrogels as Matrigel Substitutes for Epithelial Organoid Derivation. Advanced Functional Materials 30, doi:10.1002/adfm.202000761 (2020).
[127] Cruz-Acuna, R. & Garcia, A. J. Synthetic hydrogels mimicking basement membrane matrices to promote cell-matrix interactions. Matrix Biol 57-58, 324-333, doi:10.1016/j.matbio.2016.06.002 (2017).
[128] Clark, A. Y. et al. Integrin-specific hydrogels modulate transplanted human bone marrow-derived mesenchymal stem cell survival, engraftment, and reparative activities. Nat Commun 11, 114, doi:10.1038/s41467-019-14000-9 (2020).
[129] Wilson, R. L. et al. Protein-Functionalized Poly(ethylene glycol) Hydrogels as Scaffolds for Monolayer Organoid Culture. Tissue Eng Part C Methods 27, 12-23, doi:10.1089/ten.TEC.2020.0306 (2021).
[130] Klim, J. R. et al. A defined glycosaminoglycan-binding substratum for human pluripotent stem cells. Nat Methods 7, 989-994, doi:10.1038/nmeth.1532 (2010).
[131] Su, J. et al. Poly(ethylene glycol)-crosslinked gelatin hydrogel substrates with conjugated bioactive peptides influence endothelial cell behavior. Biomaterials 201, 99-112, doi:10.1016/j.biomaterials.2019.02.001 (2019).
[132] Zhu, Y. et al. Potent laminin-inspired antioxidant regenerative dressing accelerates wound healing in diabetes. Proc Natl Acad Sci U S A 115, 6816-6821, doi:10.1073/pnas.1804262115 (2018).
[133] Katagiri, F. et al. Screening of integrin-binding peptides from the laminin alpha4 and alpha5 chain G domain peptide library. Arch Biochem Biophys 521, 32-42, doi:10.1016/j.abb.2012.02.017 (2012).
[134] Gomez-Florit, M. et al. Natural-Based Hydrogels for Tissue Engineering Applications. Molecules 25, doi:10.3390/molecules25245858 (2020).
[135] Saldin, L. T. et al. Extracellular matrix hydrogels from decellularized tissues: Structure and function. Acta Biomater 49, 1-15, doi:10.1016/j.actbio.2016.11.068 (2017).
[136] Hunt, D. R. et al. Engineered Matrices Enable the Culture of Human Patient-Derived Intestinal Organoids. Adv Sci (Weinh) 8, 2004705, doi:10.1002/advs.202004705 (2021).
[137] Capeling, M. M. et al. Nonadhesive Alginate Hydrogels Support Growth of Pluripotent Stem Cell-Derived Intestinal Organoids. Stem Cell Reports 12, 381-394, doi:10.1016/j.stemcr.2018.12.001 (2019).
[138] Kim, S. et al. Tissue extracellular matrix hydrogels as alternatives to Matrigel for culturing gastrointestinal organoids. Nat Commun 13, 1692, doi:10.1038/s41467-022-29279-4 (2022).
[139] Jee, J. H. et al. Development of Collagen-Based 3D Matrix for Gastrointestinal Tract-Derived Organoid Culture. Stem Cells Int 2019, 8472712, doi:10.1155/2019/8472712 (2019).
[140] Kim, J. et al. Human organoids: model systems for human biology and medicine. Nat Rev Mol Cell Biol 21, 571-584, doi:10.1038/s41580-020-0259-3 (2020).
[141] Elosegui-Artola, A. et al. Matrix viscoelasticity controls spatiotemporal tissue organization. Nat Mater 22, 117-127, doi:10.1038/s41563-022-01400-4 (2023).
[142] Chrisnandy, A. et al. Synthetic dynamic hydrogels promote degradation-independent in vitro organogenesis. Nat Mater 21, 479-487, doi:10.1038/s41563-021-01136-7 (2022).
[143] Capeling, M. M. et al. Suspension culture promotes serosal mesothelial development in human intestinal organoids. Cell Rep 38, 110379, doi:10.1016/j.celrep.2022.110379 (2022).
[144] Kedinger, M. et al. Intestinal epithelial-mesenchymal cell interactions. Ann N Y Acad Sci 859, 1-17, doi:10.1111/j.1749-6632.1998.tb11107.x (1998).
[145] Walton, K. D. et al. Hedgehog-responsive mesenchymal clusters direct patterning and emergence of intestinal villi. Proc Natl Acad Sci U S A 109, 15817-15822, doi:10.1073/pnas.1205669109 (2012).
[146] Brandenberg, N. et al. High-throughput automated organoid culture via stem-cell aggregation in microcavity arrays. Nat Biomed Eng 4, 863-874, doi:10.1038/s41551-020-0565-2 (2020).
[147] Blatchley, M. R. & Anseth, K. S. Middle-out methods for spatiotemporal tissue engineering of organoids. Nat Rev Bioeng 1, 329-345, doi:10.1038/s44222-023-00039-3 (2023).
[148] Sudan, D. et al. A multidisciplinary approach to the treatment of intestinal failure. J Gastrointest Surg 9, 165-176; discussion 176-167, doi:10.1016/j.gassur.2004.10.014 (2005).
[149] Martinez Rivera, A. & Wales, P. W. Intestinal transplantation in children: current status. Pediatr Surg Int 32, 529-540, doi:10.1007/s00383-016-3885-2 (2016).
[150] Tzakis, A. G. et al. Clinical intestinal transplantation: focus on complications. Transplant Proc 24, 1238-1240 (1992).
[151] Lichtenstein, G. R. & Rutgeerts, P. Importance of mucosal healing in ulcerative colitis. Inflamm Bowel Dis 16, 338-346, doi:10.1002/ibd.20997 (2010).
[152] Cruz-Acuna, R. et al. PEG-4MAL hydrogels for human organoid generation, culture, and in vivo delivery. Nat Protoc 13, 2102-2119, doi:10.1038/s41596-018-0036-3 (2018).
[153] Finkbeiner, S. R. et al. Generation of tissue-engineered small intestine using embryonic stem cell-derived human intestinal organoids. Biol Open 4, 1462-1472, doi:10.1242/bio.013235 (2015).
[154] Khalil, H. A. et al. Intestinal epithelial replacement by transplantation of cultured murine and human cells into the small intestine. PLOS ONE 14, e0216326, doi:10.1371/journal.pone.0216326 (2019).
[155] O'Neill, J. D. et al. Gut bioengineering strategies for regenerative medicine. Am J Physiol Gastrointest Liver Physiol 320, G1-G11, doi:10.1152/ajpgi.00206.2020 (2021).
[156] Beetler, D. J. et al. The evolving regulatory landscape in regenerative medicine. Molecular Aspects of Medicine 91, 101138, doi:https://doi.org/10.1016/j.mam.2022.101138 (2023).
[157] Costello, C. M. et al. Synthetic small intestinal scaffolds for improved studies of intestinal differentiation. Biotechnol Bioeng 111, 1222-1232, doi:10.1002/bit.25180 (2014).
[158] Sala, F. G. et al. Tissue-engineered small intestine and stomach form from autologous tissue in a preclinical large animal model. J Surg Res 156, 205-212, doi:10.1016/j.jss.2009.03.062 (2009).
[159] Sala, F. G. et al. A multicellular approach forms a significant amount of tissue-engineered small intestine in the mouse. Tissue Eng Part A 17, 1841-1850, doi: 10. 1 089/ten.TEA.20 1 0.0564 (2011).
[160] Clevers, H. et al. Tissue-Engineering the Intestine: The Trials before the Trials. Cell Stem Cell 24, 855-859, doi:10.1016/j.stem.2019.04.018 (2019).
[161] Liu, Y. et al. Comparison of polyglycolic acid, polycaprolactone, and collagen as scaffolds for the production of tissue engineered intestine. J Biomed Mater Res B Appl Biomater 107, 750-760, doi:10.1002/jbm.b.34169 (2019).
[162] Sugimoto, S. et al. Reconstruction of the Human Colon Epithelium In vivo. Cell Stem Cell 22, 171-176 e175, doi:10.1016/j.stem.2017.11.012 (2018).
[163] Khalili, A. A. & Ahmad, M. R. A Review of Cell Adhesion Studies for Biomedical and Biological Applications. Int J Mol Sci 16, 18149-18184, doi:10.3390/ijms160818149 (2015).
[164] Mooney, D. J. & Vandenburgh, H. Cell delivery mechanisms for tissue repair. Cell Stem Cell 2, 205-213, doi:10.1016/j.stem.2008.02.005 (2008).
[165] Pompili, S. et al. The Charming World of the Extracellular Matrix: A Dynamic and Protective Network of the Intestinal Wall. Front Med (Lausanne) 8, 610189, doi:10.3389/fmed.2021.610189 (2021).
[166] Goto, T. et al. Gastrointestinal transit and mucoadhesive characteristics of complexation hydrogels in rats. J Pharm Sci 95, 462-469, doi:10.1002/jps.20566 (2006).
[167] Ouyang, J. et al. Oral Hydrogel Microbeads-Mediated In situ Synthesis of Selenoproteins for Regulating Intestinal Immunity and Microbiota. J Am Chem Soc 145, 12193-12205, doi:10.1021/jacs.3c02179 (2023).
[168] Hu, X. & Grinstaff, M. W. Advances in Hydrogel Adhesives for Gastrointestinal Wound Closure and Repair. Gels 9, doi:10.3390/gels9040282 (2023).
[169] Bovone, G. et al. Engineering Hydrogel Adhesion for Biomedical Applications via Chemical Design of the Junction. ACS Biomater Sci Eng 7, 4048-4076, doi:10.1021/acsbiomaterials.0c01677 (2021).
[170] Tian, M. et al. A Transformable Mucoadhesive Microgel Network for Noninvasive Multimodal Imaging And Radioprotection of a Large Area of the Gastrointestinal Tract. Adv Mater 35, e2303436, doi:10.1002/adma.202303436 (2023).
[171] Takahashi, K. & Yamanaka, S. Induction of pluripotent stem cells from mouse embryonic and adult fibroblast cultures by defined factors. Cell 126, 663-676, doi:10.1016/j.cell.2006.07.024 (2006).
[172] Sharma, A. et al. Multi-lineage Human iPSC-Derived Platforms for Disease Modeling and Drug Discovery. Cell Stem Cell 26, 309-329, doi:10.1016/j.stem.2020.02.011 (2020).
[173] D'Amour, K. A. et al. Efficient differentiation of human embryonic stem cells to definitive endoderm. Nat Biotechnol 23, 1534-1541, doi:10.1038/nbt1163 (2005).
[174] Pagliuca, F. W. et al. Generation of functional human pancreatic beta cells in vitro. Cell 159, 428-439, doi:10.1016/j.cell.2014.09.040 (2014).
[175] Kioulaphides, S. & Garcia, A. J. Encapsulation and immune protection for type 1 diabetes cell therapy. Adv Drug Deliv Rev 207, 115205, doi:10.1016/j.addr.2024.115205 (2024).
[176] Mulero-Russe, A. & Garcia, A. J. Engineered Synthetic Matrices for Human Intestinal Organoid Culture and Therapeutic Delivery. Adv Mater 36, e2307678, doi:10.1002/adma.202307678 (2024).
[177] Yiangou, L. et al. Human Pluripotent Stem Cell-Derived Endoderm for Modeling Development and Clinical Applications. Cell Stem Cell 22, 485-499, doi:10.1016/j.stem.2018.03.016 (2018).
[178] Smith, L. R. et al. Stem Cell Differentiation is Regulated by Extracellular Matrix Mechanics. Physiology (Bethesda) 33, 16-25, doi:10.1152/physiol.00026.2017 (2018).
[179] Kolhar, P. et al. Synthetic surfaces for human embryonic stem cell culture. J Biotechnol 146, 143-146, doi:10.1016/j.jbiotec.2010.01.016 (2010).
[180] Nguyen, E. H. et al. Versatile synthetic alternatives to Matrigel for vascular toxicity screening and stem cell expansion. Nat Biomed Eng 1, doi:10.1038/s41551-017-0096 (2017).
[181] Villa-Diaz, L. G. et al. Synthetic polymer coatings for long-term growth of human embryonic stem cells. Nat Biotechnol 28, 581-583, doi:10.1038/nbt.1631 (2010).
[182] Ramasubramanian, A. et al. High-Throughput Discovery of Targeted, Minimally Complex Peptide Surfaces for Human Pluripotent Stem Cell Culture. ACS Biomater Sci Eng 7, 1344-1360, doi:10.1021/acsbiomaterials.0c01462 (2021).
[183] Wrighton, P. J. et al. Signals from the surface modulate differentiation of human pluripotent stem cells through glycosaminoglycans and integrins. Proc Natl Acad Sci U S A 111, 18126-18131, doi:10.1073/pnas.1409525111 (2014).
[184] Sahabian, A. et al. Chemically-Defined, Xeno-Free, Scalable Production of hPSC-Derived Definitive Endoderm Aggregates with Multi-Lineage Differentiation Potential. Cells 8, doi:10.3390/cells8121571 (2019).
[185] Nomizu, M. et al. Identification of cell binding sites in the laminin alpha 1 chain carboxyl-terminal globular domain by systematic screening of synthetic peptides. J Biol Chem 270, 20583-20590, doi:10.1074/jbc.270.35.20583 (1995).
[186] Graf, J. et al. A pentapeptide from the laminin B1 chain mediates cell adhesion and binds the 67,000 laminin receptor. Biochemistry 26, 6896-6900, doi:10.1021/bi00396a004 (1987).
[187] Emsley, J. et al. Structure of the integrin alpha2beta1-binding collagen peptide. J Mol Biol 335, 1019-1028, doi:10.1016/j.jmb.2003.11.030 (2004).
[188] Hozumi, K. et al. Syndecan- and integrin-binding peptides synergistically accelerate cell adhesion. FEBS Lett 584, 3381-3385, doi:10.1016/j.febslet.2010.06.032 (2010).
[189] Tan, X. et al. Integrin and syndecan binding peptide-conjugated alginate hydrogel for modulation of nucleus pulposus cell phenotype. Biomaterials 277, 121113, doi:10.1016/j.biomaterials.2021.121113 (2021).
[190] Wong, J. C. et al. Definitive endoderm derived from human embryonic stem cells highly express the integrin receptors alphaV and beta5. Cell Adh Migr 4, 39-45, doi:10.4161/cam.4.1.10627 (2010).
[191] Puchalapalli, M. et al. The Laminin-alpha1 Chain-Derived Peptide, AG73, Binds to Syndecans on MDA-231 Breast Cancer Cells and Alters Filopodium Formation. Anal Cell Pathol (Amst) 2019, 9192516, doi:10.1155/2019/9192516 (2019).
[192] Villa-Diaz, L. G. et al. Inhibition of Focal Adhesion Kinase Signaling by Integrin alpha6beta1 Supports Human Pluripotent Stem Cell Self-Renewal. Stem Cells 34, 1753-1764, doi:10.1002/stem.2349 (2016).
[193] Brafman, D. A. et al. Regulation of endodermal differentiation of human embryonic stem cells through integrin-ECM interactions. Cell Death Differ 20, 369-381, doi:10.1038/cdd.2012.138 (2013).
[194] Baxter, M. A. et al. Analysis of the distinct functions of growth factors and tissue culture substrates necessary for the long-term self-renewal of human embryonic stem cell lines. Stem Cell Res 3, 28-38, doi:10.1016/j.scr.2009.03.002 (2009).
[195] Vitillo, L. & Kimber, S. J. Integrin and FAK Regulation of Human Pluripotent Stem Cells. Curr Stem Cell Rep 3, 358-365, doi:10.1007/s40778-017-0100-x (2017).
[196] Hall, J. E. et al. Focal adhesion kinase: exploring Fak structure to gain insight into function. Int Rev Cell Mol Biol 288, 185-225, doi:10.1016/B978-0-12-386041-5.00005-4 (2011).
[197] Vitillo, L. et al. Integrin-Associated Focal Adhesion Kinase Protects Human Embryonic Stem Cells from Apoptosis, Detachment, and Differentiation. Stem Cell Reports 7, 167-176, doi:10.1016/j.stemer.2016.07.006 (2016).
[198] Slack-Davis, J. K. et al. Cellular characterization of a novel focal adhesion kinase inhibitor. J Biol Chem 282, 14845-14852, doi:10.1074/jbc.M606695200 (2007).
[199] Koivunen, E. et al. Phage libraries displaying cyclic peptides with different ring sizes: ligand specificities of the RGD-directed integrins. Biotechnology (N Y) 13, 265-270, doi:10.1038/nbt0395-265 (1995).
[200] Gumbiner, B. M. & Kim, N. G. The Hippo-YAP signaling pathway and contact inhibition of growth. J Cell Sci 127, 709-717, doi:10.1242/jcs.140103 (2014).
[201] Zhang, Y. Z. & Li, Y. Y. Inflammatory bowel disease: pathogenesis. World J Gastroenterol 20, 91-99, doi:10.3748/wjg.v20.i1.91 (2014).
[202] America, C. C. F. o. The Facts About Inflammatory Bowel Diseases (2019).
[203] Lichtenstein, G. R. et al. Lifetime Economic Burden of Crohn's Disease and Ulcerative Colitis by Age at Diagnosis. Clin Gastroenterol Hepatol 18, 889-897 e810, doi:10.1016/j.cgh.2019.07.022 (2020).
[204] Okamoto, R. & Watanabe, M. Role of epithelial cells in the pathogenesis and treatment of inflammatory bowel disease. J Gastroenterol 51, 11-21, doi:10.1007/s00535-015-1098-4 (2016).
[205] Yoo, J. H. & Donowitz, M. Intestinal enteroids/organoids: A novel platform for drug discovery in inflammatory bowel diseases. World J Gastroenterol 25, 4125-4147, doi:10.3748/wjg.v25.i30.4125 (2019).
[206] Pariente, B. et al. Treatments for Crohn's Disease-Associated Bowel Damage: A Systematic Review. Clin Gastroenterol Hepatol 17, 847-856, doi:10.1016/j.cgh.2018.06.043 (2019).
[207] Okamoto, R. et al. Organoid-based regenerative medicine for inflammatory bowel disease. Regen Ther 13, 1-6, doi:10.1016/j.reth.2019.11.004 (2020).
[208] Poling, H. et al. Human pluripotent stem cell derived organoids regenerate damaged bowel in vivo. (in preparation) (2024).
[209] Ishii, T. et al. Exfoliative rejection after intestinal transplantation in children. Pediatr Transplant 7, 185-191, doi:10.1034/j.1399-3046.2003.00063.x (2003).
[210] Pereira, E. S. A. et al. A histomorphometric classification system for normal and inflamed mouse duodenum-Quali-quantitative approach. Int J Exp Pathol 99, 189-198, doi:10.1111/iep.12286 (2018).
[211] US Patent Publication No. 2024/0189349
[212] US Patent Application No. 12/036,239
[213] US Patent Publication No. 2024/0122850
[214] US Patent No. 11,759,624
[215] US Patent Publication No. 2023/0310609
Aspects of the invention will now also be described with reference to the following numbered clauses:
1. A hydrogel formable to deliver a cargo to a tubular epithelial structure, the hydrogel formed by:
   a) preparing a hydrogel precursor comprising the cargo;
   b) applying the hydrogel precursor to the tubular epithelial structure through a lumen of said tubular epithelial structure; and
   c) curing the hydrogel precursor, thereby forming a hydrogel comprising the cargo;
   wherein the hydrogel degrades over time, thereby releasing the cargo to the tubular epithelial structure.
2. The hydrogel of clause 1, wherein the hydrogel precursor comprises a hydrolyzable macromer and/or a degradable crosslinker.
3. The hydrogel of clause 1 or 2, wherein the hydrogel precursor comprises a poly(ethylene glycol) (PEG) macromer.
4. The hydrogel of any one of clauses 1 to 3, wherein the hydrogel precursor comprises a 4 arm norbornene-terminated poly(ethylene glycol) (PEG-4NB) macromer, an 8 arm norbornene-terminated poly(ethylene glycol) with ester linkage (PEG-8eNB) macromer, an 8 arm norbornene-terminated poly(ethylene glycol) with amide linkage (PEG-8aNM) macromer, or any combination thereof.
5. The hydrogel of clause 2, wherein the crosslinker comprises a protease-degradable peptide having one or more sequences comprising GPQW, VPM, and/or IPES.
6. The hydrogel of any one of clauses 1 to 5, wherein the cargo comprises a small molecule, a therapeutic agent, a peptide, a nucleic acid, a cell, or any combination thereof.
7. The hydrogel of any one of clauses 1 to 6, wherein the cargo comprises stem cells, one or more anti-inflammatory agents, organoids or fragments thereof, or any combination thereof.
8. The hydrogel of any one of clauses 1 to 7, wherein the cargo comprises human intestinal organoids or fragments thereof.
9. The hydrogel of any one of clauses 1 to 8, wherein step b) comprises injecting the hydrogel precursor into the lumen, thereby at least partially filling the lumen with the hydrogel; or
   wherein step b) comprises spraying the hydrogel precursor onto an internal surface of the tubular epithelial structure through the lumen.
10. The hydrogel of any one of clauses 1 to 9, wherein, in step c), the hydrogel is formed as a hydrogel body by exposing the hydrogel precursor to light using a light source external to the tubular epithelial structure, or using a light source deposited within the lumen.
11. The hydrogel of any one of clauses 1 to 10, wherein about 90% or more of the hydrogel degrades after from about 12 hours to about 96 hours after step c) is conducted.
12. A method of delivering a cargo to a tubular epithelial structure, the method comprising:
   a) preparing a hydrogel precursor comprising the cargo;
   b) applying the hydrogel precursor to the tubular epithelial structure through a lumen of said tubular epithelial structure; and
   c) curing the hydrogel precursor, thereby forming a hydrogel comprising the cargo;
   wherein the hydrogel degrades over time, thereby releasing the cargo to the tubular epithelial structure.
13. The method of clause 12, wherein the tubular epithelial structure is injured and/or diseased.
14. The method of clause 12 or 13, wherein the hydrogel precursor comprises a hydrolyzable macromer and/or a degradable crosslinker.
15. The method of any one of clauses 12 to 14, wherein the cargo comprises a small molecule, a therapeutic agent, a peptide, a nucleic acid, a cell, or any combination thereof.
16. The method of any one of clauses 12 to 15, wherein step b) comprises injecting the hydrogel precursor into the lumen, thereby at least partially filling the lumen with the hydrogel; or
   wherein step b) comprises spraying the hydrogel precursor onto an internal surface of the tubular epithelial structure through the lumen.
17. The method of any one of clauses 12 to 16, wherein step c) comprises exposing the hydrogel precursor to light.
18. The method of any one of clauses 12 to 17, wherein step c) comprises exposing the hydrogel precursor to light using a light source external to the tubular epithelial structure, or using a light source deposited within the lumen.
19. A method of treating and/or preventing tissue damage in a subject, the method comprising conducting the method of any one of clauses 12 to 18 within a tubular epithelial structure of the subject.
20. The method of clause 19, wherein the subject has inflammatory bowel disease, Crohn's disease, ulcerative colitis, and/or has or has been treated for cancer.

## Claims

1. A hydrogel formable to deliver a cargo to a tubular epithelial structure, the hydrogel formed by:
a) preparing a hydrogel precursor comprising the cargo;
b) applying the hydrogel precursor to the tubular epithelial structure through a lumen of said tubular epithelial structure; and
c) curing the hydrogel precursor, thereby forming a hydrogel comprising the cargo;
wherein the hydrogel degrades over time, thereby releasing the cargo to the tubular epithelial structure;
optionally wherein about 90% or more of the hydrogel degrades after from about 12 hours to about 96 hours after step c) is conducted.

2. The hydrogel of claim 1, wherein the hydrogel precursor comprises a hydrolyzable macromer;
optionally wherein the hydrogel precursor comprises a poly(ethylene glycol) (PEG) macromer;
optionally wherein the hydrogel precursor comprises a 4 arm norbornene-terminated poly(ethylene glycol) (PEG-4NB) macromer, an 8 arm norbornene-terminated poly(ethylene glycol) with ester linkage (PEG-8eNB) macromer, an 8 arm norbornene-terminated poly(ethylene glycol) with amide linkage (PEG-8aNM) macromer, or any combination thereof.

3. The hydrogel of any one of claims 1-2, wherein the hydrogel precursor comprises a degradable crosslinker;
optionally wherein the crosslinker comprises a protease-degradable peptide having one or more sequences comprising GPQW, VPM, and/or IPES.

4. The hydrogel of any one of claims 1-3, wherein the cargo comprises a small molecule, a therapeutic agent, a peptide, a nucleic acid, a cell, or any combination thereof;
optionally wherein the cargo comprises stem cells, one or more anti-inflammatory agents, and/or organoids or fragments thereof;
optionally wherein the cargo comprises human intestinal organoids or fragments thereof.

5. The hydrogel of any one of claims 1-4, wherein step b) comprises injecting the hydrogel precursor into the lumen, thereby at least partially filling the lumen with the hydrogel; or
wherein step b) comprises spraying the hydrogel precursor onto an internal surface of the tubular epithelial structure through the lumen;
optionally wherein the hydrogel is formed as a hydrogel body or as a hydrogel coating on an internal surface of the tubular epithelial structure.

6. The hydrogel of any one of claims 1-5, wherein step c) comprises exposing the hydrogel precursor to light;
optionally wherein step c) comprises exposing the hydrogel precursor to UV light.

7. Use of a hydrogel for delivering a cargo to a tubular epithelial structure, the use comprising:
a) preparing a hydrogel precursor comprising the cargo;
b) applying the hydrogel precursor to the tubular epithelial structure through a lumen of said tubular epithelial structure; and
c) curing the hydrogel precursor, thereby forming a hydrogel comprising the cargo;
wherein the hydrogel degrades over time, thereby releasing the cargo to the tubular epithelial structure.

8. The use of claim 7, wherein the tubular epithelial structure is a small intestine, a large intestine, an esophagus, a stomach, a colon, an artery, a vein, a renal tubule, a ureter, a urinary bladder, a urethra, a fallopian tube, a pancreatic duct, a bile duct, or a uterus;
optionally wherein the tubular epithelial structure is injured and/or diseased.

9. The use of any one of claims 7-8, wherein the hydrogel precursor comprises a hydrolyzable macromer;
optionally wherein the hydrogel precursor comprises a poly(ethylene glycol) (PEG) macromer;
optionally wherein the hydrogel precursor comprises a 4 arm norbornene-terminated poly(ethylene glycol) (PEG-4NB) macromer, an 8 arm norbornene-terminated poly(ethylene glycol) with ester linkage (PEG-8eNB) macromer, an 8 arm norbornene-terminated poly(ethylene glycol) with amide linkage (PEG-8aNM) macromer, or any combination thereof.

10. The use of any one of claims 7-9, wherein the hydrogel precursor comprises a degradable crosslinker;
optionally wherein the crosslinker comprises a protease-degradable peptide having one or more sequences comprising GPQW, VPM, and/or IPES.

11. The use of any one of claims 7-10, wherein the cargo comprises a small molecule, a therapeutic agent, a peptide, a nucleic acid, a cell, or any combination thereof;
optionally wherein the cargo comprises stem cells, one or more anti-inflammatory agents, and/or organoids or fragments thereof;
optionally wherein the cargo comprises human intestinal organoids or fragments thereof.

12. The use of any one of claims 7-11, wherein step b) comprises injecting the hydrogel precursor into the lumen, thereby at least partially filling the lumen with the hydrogel; or
wherein step b) comprises spraying the hydrogel precursor onto an internal surface of the tubular epithelial structure through the lumen.

13. The use of any one of claims 7-12, wherein step c) comprises exposing the hydrogel precursor to light;
optionally wherein step c) comprises exposing the hydrogel precursor to UV light.

14. The use of any one of claims 7-13, wherein step c) comprises exposing the hydrogel precursor to light using a light source external to the tubular epithelial structure; or
wherein step c) comprises exposing the hydrogel precursor to light using a light source deposited within the lumen.

15. Use of the hydrogel of any one of claims 7-14 for treating and/or preventing tissue damage in a subject, optionally wherein the subject has inflammatory bowel disease, Crohn's disease, ulcerative colitis, and/or has or has been treated for cancer.
